# EUROPEAN PATENT APPLICATION

(11) **EP 4 734 628 A1**
(43) Date of publication of application: **29.04.2026**
(21) Application number: 23942734.7
(22) Date of filing: 26.06.2023
(51) Int. Cl.: H04W 72/04

(54) **INFORMATION DETERMINATION METHOD, TERMINAL, AND NETWORK DEVICE**

(71) Applicant: Beijing Xiaomi Mobile Software Co., Ltd., Beijing 100085 (CN)
(72) Inventor: GUO, Shengxiang, Beijing 100085 (CN)
(74) Representative: Stöckeler, Ferdinand
(86) International application number: PCT/CN2023/102530
(87) International publication number: WO 2025/000208

(57) **Abstract**

The present disclosure relates to an information determination method, a terminal, and a network device. The method executed by a terminal comprises: receiving first indication information sent by a network device, wherein the first indication information is used for indicating that a configured grant (CG) is configured to be a first-type CG configuration or a second-type CG configuration, and a CG period indicated by the second-type CG configuration comprises a plurality of TOs. In this way, the terminal can determine, on the basis of the first indication information from the network device, whether the CG is configured to be the first-type CG configuration or the second-type CG configuration, which helps the terminal to then respectively determine corresponding execution modes according to different types of CG configurations, thereby ensuring normal communication.

## Description

### FIELD

The present invention relates to the field of communication technology, and in particular to an information determination method, a terminal, and a network device.

### BACKGROUND

Extended reality (XR, such as virtual reality (VR), augmented reality (AR)) services require low latency and high throughput. To enhance the XR services, it is proposed to enhance configured grant (CG), and multiple CG PUSCH transmission occasions (also called CG PUSCH occasions, TOs for short) may be configured within a CG period.

### SUMMARY

For a second type of CG configuration where multiple TOs are included in a CG period and a first type of CG configuration which is different from the second type of CG configuration, a terminal cannot directly determine whether a CG configuration configured by a network device is the first type of CG configuration or the second type of CG configuration.

Embodiments of the present invention provide an information determination method, a terminal, and a network device.

According to a first aspect of embodiments of the present invention, there is provided an information determination method, which includes that a terminal receives first indication information from a network device, the first indication information indicates that a configured grant (CG) configuration is a first type of CG configuration or a second type of CG configuration, and a CG period indicated by the second type of CG configuration includes multiple TOs. In this way, the terminal may determine whether the CG configuration is the first type of CG configuration or the second type of CG configuration based on the first indication information from the network device, which is beneficial for the terminal to subsequently determine respective execution modes according to different types of CG configurations to ensure the normal communication.

According to a second aspect of embodiments of the present invention, there is provided an information determination method, which includes that a network device sends first indication information to a terminal, the first indication information indicates that a configured grant (CG) configuration is a first type of CG configuration or a second type of CG configuration, and a CG period indicated by the second type of CG configuration includes multiple TOs. In this way, the network device may directly indicate to the terminal through the first indication information whether the CG configuration is the first type of CG configuration or the second type of CG configuration, which is beneficial for the terminal to subsequently determine respective execution modes according to different types of CG configurations to ensure the normal communication.

According to a third aspect of embodiments of the present invention, there is provided an information determination method, which includes that: a terminal receives first indication information from a network device, where the first indication information indicates that a configured grant (CG) configuration is a first type of CG configuration or a second type of CG configuration, and a CG period indicated by the second type of CG configuration includes multiple TOs; and the network device sends the first indication information to the terminal, where the first indication information indicates that the configured grant (CG) configuration is the first type of CG configuration or the second type of CG configuration, and the CG period indicated by the second type of CG configuration includes multiple TOs. In this way, the terminal may determine whether the CG configuration is the first type of CG configuration or the second type of CG configuration based on the first indication information from the network device, which is beneficial for the terminal to subsequently determine respective execution modes according to different types of CG configurations to ensure the normal communication.

According to a fourth aspect of embodiments of the present invention, there is provided a terminal, which includes: a transceiver module configured to receive first indication information sent by a network device, the first indication information indicates that a configured grant (CG) configuration is a first type of CG configuration or a second type of CG configuration, and a CG period indicated by the second type of CG configuration includes multiple TOs.

According to a fifth aspect of embodiments of the present invention, there is provided a network device, which includes: a transceiver module configured to send first indication information to a terminal, the first indication information indicates that a configured grant (CG) configuration is a first type of CG configuration or a second type of CG configuration, and a CG period indicated by the second type of CG configuration includes multiple TOs.

According to a sixth aspect of embodiments of the present invention, there is provided a terminal, which includes: one or more processors, and the terminal is configured to perform the information determination method as described in the first aspect.

According to a seventh aspect of embodiments of the present invention, there is provided a network device, which includes: one or more processors, and the network device is configured to perform the information determination method as described in the second aspect.

According to an eighth aspect of embodiments of the present invention, there is provided a communication system, which includes: a terminal and a network device, the terminal is configured to perform the information determination method as described in the first aspect, and the network device is configured to perform the information determination method as described in the second aspect.

According to a ninth aspect of embodiments of the present invention, there is provided a storage medium having stored therein instructions that, when run by a communication device, cause the communication device to perform the information determination method as described in claims, the second aspect or the second aspect.

### BRIEF DESCRIPTION OF THE DRAWINGS

In order to clearly illustrate technical solutions in embodiments of the present invention, drawings to be used for the description of embodiments of the present invention are described below, and the following drawings only involve some embodiments of the present invention and do not impose specific limitations on the protection scope of the present invention.
FIG. 1 is a schematic diagram showing an architecture of a communication system according to embodiments of the present invention;
FIG. 2 is a schematic flowchart of an information determination method according to embodiments of the present invention;
FIG. 3A is a schematic flowchart of another information determination method according to embodiments of the present invention;
FIG. 3B is a schematic flowchart of yet another information determination method according to embodiments of the present invention;
FIG. 3C is a schematic flowchart of yet another information determination method according to embodiments of the present invention;
FIG. 4A is a schematic flowchart of yet another information determination method according to embodiments of the present invention;
FIG. 4B is a schematic flowchart of yet another information determination method according to embodiments of the present invention;
FIG. 4C is a schematic flowchart of yet another information determination method according to embodiments of the present invention;
FIG. 5 is a block diagram of a terminal according to embodiments of the present invention;
FIG. 6 is a block diagram of a network side device according to embodiments of the present invention;
FIG. 7 is a block diagram of a communication device according to embodiments of the present invention; and
FIG. 8 is a block diagram of a chip according to embodiments of the present invention.

### DETAILED DESCRIPTION

Embodiments of the present invention provide an information determination method, a terminal, and a network device.

In a first aspect, embodiments of the present invention provide an information determination method, which includes that a terminal receives first indication information from a network device, the first indication information indicates that a configured grant (CG) configuration is a first type of CG configuration or a second type of CG configuration, and a CG period indicated by the second type of CG configuration includes multiple TOs.

In the above embodiments, the terminal may determine whether the CG configuration is the first type of CG configuration or the second type of CG configuration based on the first indication information from the network device, which is beneficial for the terminal to subsequently determine respective execution modes according to different types of CG configurations to ensure the normal communication.

In combination with some embodiments of the first aspect, in some embodiments, the first indication information includes a first parameter, and the first indication information indicates that the CG configuration is the second type of CG configuration; or
the first indication information does not include a first parameter, and the first indication information indicates that the CG configuration is the first type of CG configuration; or
the first indication information includes a first parameter, and the first indication information indicates that the CG configuration is the first type of CG configuration; or
the first indication information does not include a first parameter, and the first indication information indicates that the CG configuration is the second type of CG configuration; or
the first indication information includes a second parameter, the second parameter is a specific value, and the first indication information indicates that the CG configuration is the second type of CG configuration; or
the first indication information includes a second parameter, the second parameter is not a specific value, and the first indication information indicates that the CG configuration is the first type of CG configuration; or
the first indication information includes a second parameter, the second parameter is a specific value, and the first indication information indicates that the CG configuration is the first type of CG configuration; or
the first indication information includes a second parameter, the second parameter is not a specific value, and the first indication information indicates that the CG configuration is the second type of CG configuration; or
the first indication information includes a second parameter, the second parameter is a specific identifier, and the first indication information indicates that the CG configuration is the second type of CG configuration; or
the first indication information includes a second parameter, the second parameter is not a specific identifier, and the first indication information indicates that the CG configuration is the first type of CG configuration; or
the first indication information includes a second parameter, the second parameter is a specific identifier, and the first indication information indicates that the CG configuration is the first type of CG configuration; or
the first indication information includes a second parameter, the second parameter is not a specific identifier, and the first indication information indicates that the CG configuration is the second type of CG configuration; or
the first indication information includes a third parameter, the third parameter is an integer greater than 1, and the first indication information indicates that the CG configuration is the second type of CG configuration; or
the first indication information includes a third parameter, the third parameter is 1, and the first indication information indicates that the CG configuration is the first type of CG configuration.

In the above embodiments, the terminal may determine whether the CG configuration is the first type of CG configuration or the second type of CG configuration according to the different contents included in the first indication information, so as to facilitate the terminal to quickly determine the CG configuration.

In combination with some embodiments of the first aspect, in some embodiments, receiving, by the terminal, the first indication information sent by the network device includes: receiving a radio resource control (RRC) signaling sent by the network device, and the RRC signaling includes the first indication information.

In the above embodiments, the first indication information is indicated by the RRC signaling, which may reduce signaling overhead.

In combination with some embodiments of the first aspect, in some embodiments, the multiple TOs in the CG period are configured by the network device, or the multiple TOs in the CG period are valid TOs, and time-frequency resources corresponding to the valid TOs do not conflict with a downlink resource.

In the above embodiments, the multiple TOs included in the CG period in the CG configuration configured by the network device for the terminal are valid TOs, and the terminal may directly use the TO indicated by the CG configuration, thereby improving communication efficiency.

In combination with some embodiments of the first aspect, in some embodiments, the terminal receives second indication information sent by the network device, the second indication information indicates whether the terminal needs to send specific uplink control information for indicating whether a TO is used.

In the above embodiments, the terminal may determine whether it needs to send the specific uplink control information based on the second indication information, so that the terminal sends the specific uplink control information when it is needed by the network device, thereby improving communication efficiency.

In combination with some embodiments of the first aspect, in some embodiments, the second indication information includes a fourth parameter, and the second indication information indicates that the terminal needs to send the specific uplink control information; or
the second indication information includes a fourth parameter, and the second indication information indicates that the terminal does not need to send the specific uplink control information; or
the second indication information does not include a fourth parameter, and the second indication information indicates that the terminal needs to send the specific uplink control information; or
the second indication information does not include a fourth parameter, and the second indication information indicates that the terminal does not need to send the specific uplink control information.

In the above embodiments, the terminal may determine whether it needs to send the specific uplink control information based on different parameters included in the second indication information, so that the terminal sends the specific uplink control information when it is needed by the network device, thereby improving communication efficiency.

In combination with some embodiments of the first aspect, in some embodiments, the terminal sends the specific uplink control information to the network device.

In combination with some embodiments of the first aspect, in some embodiments, in a case where the specific uplink control information indicates a state of a first TO is used, next specific uplink control information sent next time also indicates the state of the first TO is used; or
in a case where the specific uplink control information indicates a state of a first TO is unused, next specific uplink control information sent next time also indicates the state of the first TO is unused; or
in a case where the specific uplink control information indicates a state of a first TO is used, subsequent specific uplink control information sent thereafter also indicates the state of the first TO is used; or
in a case where the specific uplink control information indicates a state of a first TO is unused, subsequent specific uplink control information sent thereafter also indicates the state of the first TO is unused; or
in a case where the specific uplink control information indicates a state of a first TO is unused, the terminal is not allowed to modify the state of the first TO; or
in a case where the specific uplink control information indicates a state of a first TO is used, the terminal is not allowed to modify the state of the first TO.

In combination with some embodiments of the first aspect, in some embodiments, receiving, by the terminal, the second indication information sent by the network device includes: receiving a radio resource control (RRC) signaling sent by the network device, where the RRC signaling includes the second indication information; or
receiving a dynamic signaling sent by the network device, where the dynamic signaling includes the second indication information; or
receiving a media access control control element (MAC CE) sent by the network device, where the MAC CE includes the second indication information.

In the above embodiments, the existing signaling is used to indicate the second indication information, which may reduce signaling overhead.

In combination with some embodiments of the first aspect, in some embodiments, the terminal receives configuration information sent by the network device, and the configuration information includes a specific CG configuration for the second type of CG configuration.

In combination with some embodiments of the first aspect, in some embodiments, it is determined that the specific CG configuration does not include a specific parameter, and it is determined by default that the specific parameter is n, where n is predefined by a protocol; or
it is determined that the specific CG configuration does not include a specific parameter, and it is determined that the specific CG configuration is not activated; or
it is determined that the specific CG configuration does not include a specific parameter, it is determined that the specific CG configuration is activated as the first type of CG configuration, and only a first TO among multiple TOs indicated by the specific CG configuration is available;
the specific parameter is a number of slots for configuring PUSCH in the CG period or a number of TOs configured in the CG period.

In the above embodiments, in the case where the specific CG configuration for the second type of CG configuration does not include the specific parameter, the terminal determines whether the specific CG configuration is activated, or the specific CG configuration is activated as the first type of CG configuration, to determine the available TO in the TOs indicated by the specific CG configuration to avoid communication failure.

In a second aspect, embodiments of the present invention provide an information determination method, which includes that a network device sends first indication information to a terminal, the first indication information indicates that a configured grant (CG) configuration is a first type of CG configuration or a second type of CG configuration, and a CG period indicated by the second type of CG configuration includes multiple TOs.

In combination with some embodiments of the second aspect, in some embodiments, the first indication information includes a first parameter, and the first indication information indicates that the CG configuration is the second type of CG configuration; or
the first indication information does not include a first parameter, and the first indication information indicates that the CG configuration is the first type of CG configuration; or
the first indication information includes a first parameter, and the first indication information indicates that the CG configuration is the first type of CG configuration; or
the first indication information does not include a first parameter, and the first indication information indicates that the CG configuration is the second type of CG configuration; or
the first indication information includes a second parameter, the second parameter is a specific value, and the first indication information indicates that the CG configuration is the second type of CG configuration; or
the first indication information includes a second parameter, the second parameter is not a specific value, and the first indication information indicates that the CG configuration is the first type of CG configuration; or
the first indication information includes a second parameter, the second parameter is a specific value, and the first indication information indicates that the CG configuration is the first type of CG configuration; or
the first indication information includes a second parameter, the second parameter is not a specific value, and the first indication information indicates that the CG configuration is the second type of CG configuration; or
the first indication information includes a second parameter, the second parameter is a specific identifier, and the first indication information indicates that the CG configuration is the second type of CG configuration; or
the first indication information includes a second parameter, the second parameter is not a specific identifier, and the first indication information indicates that the CG configuration is the first type of CG configuration; or
the first indication information includes a second parameter, the second parameter is a specific identifier, and the first indication information indicates that the CG configuration is the first type of CG configuration; or
the first indication information includes a second parameter, the second parameter is not a specific identifier, and the first indication information indicates that the CG configuration is the second type of CG configuration; or
the first indication information includes a third parameter, the third parameter is an integer greater than 1, and the first indication information indicates that the CG configuration is the second type of CG configuration; or
the first indication information includes a third parameter, the third parameter is 1, and the first indication information indicates that the CG configuration is the first type of CG configuration.

In combination with some embodiments of the second aspect, in some embodiments, sending, by the network device, the first indication information to the terminal includes: sending an RRC signaling to the terminal, and the RRC signaling includes the first indication information.

In combination with some embodiments of the second aspect, in some embodiments, the multiple TOs in the CG period are configured by the network device, or
the multiple TOs in the CG period are valid TOs, and time-frequency resources corresponding to the valid TOs do not conflict with a downlink resource.

In combination with some embodiments of the second aspect, in some embodiments, the network device sends second indication information to the terminal, the second indication information indicates whether the terminal needs to send specific uplink control information for indicating whether a TO is used subsequently.

In combination with some embodiments of the second aspect, in some embodiments, the second indication information includes a fourth parameter, and the second indication information indicates that the terminal needs to send the specific uplink control information; or
the second indication information includes a fourth parameter, and the second indication information indicates that the terminal does not need to send the specific uplink control information; or
the second indication information does not include a fourth parameter, and the second indication information indicates that the terminal needs to send the specific uplink control information; or
the second indication information does not include a fourth parameter, and the second indication information indicates that the terminal does not need to send the specific uplink control information.

In combination with some embodiments of the second aspect, in some embodiments, the network device receives the specific uplink control information sent by the terminal.

In combination with some embodiments of the second aspect, in some embodiments, in a case where the specific uplink control information indicates a state of a first TO is used, the network device ignores an indication for the first TO from subsequent specific uplink control information; or
in a case where the specific uplink control information indicates a state of a first TO is unused, the network device ignores an indication for the first TO from subsequent specific uplink control information.

In combination with some embodiments of the second aspect, in some embodiments, sending, by the network device, the second indication information to the terminal includes:
sending an RRC signaling to the terminal, where the RRC signaling includes the second indication information; or
sending a dynamic signaling to the terminal, where the dynamic signaling includes the second indication information; or
sending a MAC CE to the terminal, where the MAC CE includes the second indication information.

In combination with some embodiments of the second aspect, in some embodiments, the network device sends configuration information to the terminal, and the configuration information includes a specific CG configuration for the second type of CG configuration.

In combination with some embodiments of the second aspect, in some embodiments, the specific CG configuration does not include a specific parameter, and the specific parameter is the number of slots for configuring PUSCH in the CG period or a number of TOs configured in the CG period.

In a third aspect, embodiments of the present invention provide a terminal, which includes at least one of: a transceiver module, or a processing module; and the terminal is configured to perform optional implementation manners of the first aspect.

In a fourth aspect, embodiments of the present invention provide a network device, which includes at least one of: a transceiver module, or a processing module; and the network device is configured to perform optional implementation manners of the second aspect.

In a fifth aspect, embodiments of the present invention provide a terminal, which includes: one or more processors; and the terminal is configured to perform optional implementation manners of the first aspect.

In a sixth aspect, embodiments of the present invention provide a network device, which includes: one or more processors; and the network device is configured to perform optional implementation manners of the second aspect.

In the seventh aspect, embodiments of the present invention provide a communication system, which includes: a terminal and a network device; the terminal is configured to perform the method described in optional implementation manners of the first aspect, and the network device is configured to perform the method described in optional implementation manners of the second aspect.

In an eighth aspect, embodiments of the present invention provide a storage medium having stored therein instructions that, when run on a communication device, cause the communication device to perform the method described in optional implementation manners of the first and second aspects.

In a ninth aspect, embodiments of the present invention provide a program product that, when executed by a communication device, causes the communication device to perform the method described in optional implementation manners of the first and second aspects.

In a tenth aspect, embodiments of the present invention provide a computer program that, when run on a computer, enables the computer to perform the method described in optional implementation manners of the first and second aspects.

In an eleventh aspect, embodiments of the present invention provide a chip or a chip system. The chip or the chip system includes a processing circuit configured to perform the method described in optional implementation manners of the first and second aspects.

It is understandable that the above-mentioned terminal, network device, communication system, storage media, program product, computer programs, chips or chip systems are all configured to perform the methods described in embodiments of the present invention. Therefore, for the beneficial effects that may be achieved thereby reference may be made to the beneficial effects in the corresponding methods, which will not be repeated here.

Embodiments of the present invention provide an information determination method, a terminal, and a network device.

In some embodiments, terms such as information determination method, information processing method, communication method, etc. may be interchangeable.

Embodiments of the present invention are not exhaustive, but are examples of some embodiments, and are not intended to constitute a limitation on the scope of protection of the present invention. In the absence of contradiction, each step in a certain embodiment may be implemented as an independent embodiment, and individual steps may be arbitrarily combined. For example, a solution obtained after removing one or more steps from a certain embodiment may also be implemented as an independent embodiment, and steps in a certain embodiment may be arbitrarily exchanged in order. In addition, optional implementation manners in a certain embodiment may be arbitrarily combined. In addition, various embodiments may be arbitrarily combined, for example, some or all of the steps of different embodiments may be arbitrarily combined, and a certain embodiment may be arbitrarily combined with an optional implementation manner of other embodiments.

In various embodiments of the present invention, unless specified otherwise or there is a logical conflict, terms and/or descriptions among various embodiments are of consistency and may be referenced to each other, and technical features in different embodiments may be combined to form new embodiments based on their internal logical relationships.

Terms used in embodiments of the present invention are for the purpose of describing specific embodiments and are not intended to limit the present invention.

In embodiments of the present invention, unless specified otherwise, an element expressed in the singular form, such as expressed with words like "a", "an", "the", "described above", "said", "aforementioned", "this", etc., may mean "one and only one", or mean "one or more", "at least one", etc. For example, where articles such as "a", "an", "the" used in English are used in translation, the noun after the article may be understood as a singular expression or a plural expression.

In embodiments of the present invention, "a plurality of" refers to two or more.

In some embodiments, phrases like "at least one", "at least one of", "one or more", "a plurality of", "multiple", etc. may be used interchangeably.

In some embodiments, expressions such as "at least one of A and B", "A and/or B", "A in a case, B in another case", "A in response to a case, B in response to another case", etc., may include the following technical solutions depending on circumstances: in some embodiments, A (A is executed independently of B); in some embodiments, B (B is executed independently of A); in some embodiments, execution is selected from A and B (A and B are selectively executed); in some embodiments, A and B (both A and B are executed). Similar principles apply when there are more branches, such as A, B, C, etc.

In some embodiments, the expression like "A or B" may include the following technical solutions depending on circumstances: in some embodiments, A (A is executed independently of B); in some embodiments, B (B is executed independently of A); in some embodiments, execution is selected from A and B (A and B are selectively executed). Similar principles apply when there are more branches, such as A, B, C, etc.

The prefixes such as "first" and "second" in embodiments of the present invention are used to distinguish different objects described, and do not constitute restrictions on the position, order, priority, quantity or content of the described objects. The statement for the described objects refers to the description in the context of the claims or embodiments, and the use of prefixes should not bring unnecessary restrictions. For example, if the described objects are "fields", such as "first field" and "second field", the ordinal numbers, i.e., "first" and "second", before these "fields" do not limit positions or order of these "fields", and the "first" and "second" do not limit whether the "fields" they define are in the same message, nor do they limit the order of the "first field" and the "second field". For another example, if the described objects are "levels", such as "first level" and "second level", the ordinal numbers before these "levels" do not limit the priority between these "levels". For another example, the number of the described object is not limited by the ordinal number, the number of the described object may be one or more. Taking "first apparatus" as an example, the number of the "apparatus" may be one or more. In addition, the objects defined by different prefixes may be the same or different. For example, if the described object is "apparatus", then "first apparatus" and "second apparatus" may be the same apparatus or different apparatuses, and their types may be the same or different. For another example, if the described object is "information", then "first information" and "second information" may be the same information or different information, and their contents may be the same or different.

In some embodiments, "including A", "comprising A", "indicating A", and "carrying A" may be interpreted as directly carrying A or indirectly indicating A.

In some embodiments, phrases such as "in response to...", "in response to determining...", "in a case where...", "upon...", "when...", "in case of...", "if..." or the like may be used interchangeably.

In some embodiments, terms such as "greater than", "greater than or equal to", "not less than", "more than", "more than or equal to", "not less than", "higher than", "higher than or equal to", "not lower than", and "above" are interchangeable, and terms such as "smaller than", "smaller than or equal to", "not greater than", "less than", "less than or equal to", "no more than", "lower than", "lower than or equal to", "not higher than", and "below" are interchangeable.

In some embodiments, the apparatus and device may be interpreted as physical or virtual, and their names are not limited to those recorded in embodiments. In some cases, each of them may be understood as "equipment", "device", "circuit", "network element", "node", "function", "unit", "section", "system", "network", "chip", "chip system", "entity", "body", etc.

In some embodiments, the term "network" may be interpreted as a device included in the network, such as an access network device, a core network device, etc.

In some embodiments, "access network device (AN device)" may also be called "radio access network device (RAN device)", "base station (BS)", "radio base station", "fixed station". In some embodiments, it may also be understood as "node", "access point", "transmission point (TP)", "reception point (RP)", "transmission and/or reception point (transmission/reception point, TRP)", "panel", "antenna panel", "antenna array", "cell", "macro cell", "small cell", "femto cell", "pico cell", "sector", "cell group", "serving cell", "carrier", "component carrier", "bandwidth part (BWP)", etc.

In some embodiments, "terminal" or "terminal device" may also be called "user equipment (UE)", "user terminal" "mobile station (MS)", "mobile terminal (MT)", subscriber station, mobile unit, subscriber unit, wireless unit, remote unit, mobile device, wireless device, wireless communication device, remote device, mobile subscriber station, access terminal, mobile terminal, wireless terminal, remote terminal, handset, user agent, mobile client, client, etc.

In some embodiments, acquisition of data, information, etc. may comply with the laws and regulations of the country where the activity takes place.

In some embodiments, data, information, etc., may be obtained with the user's consent.

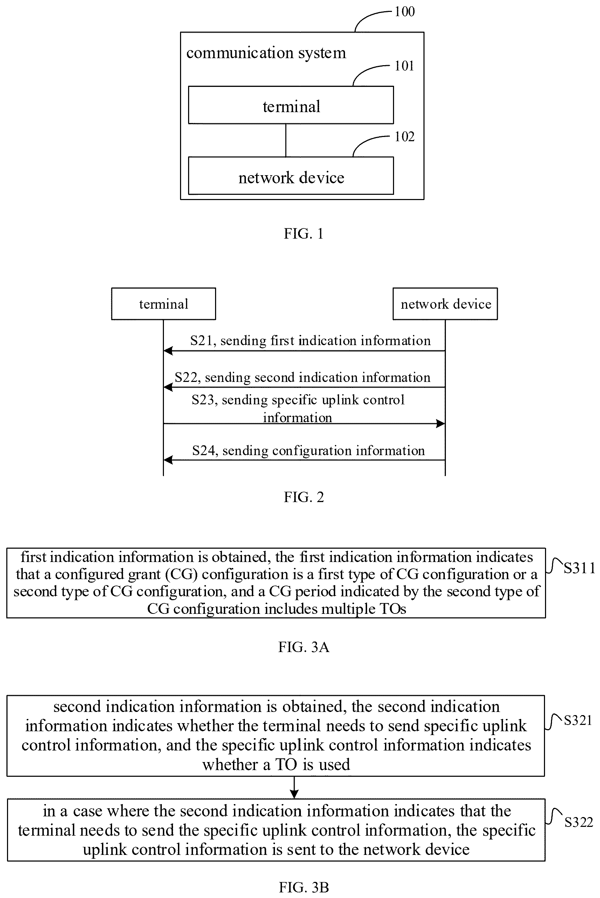

FIG. 1 is a schematic diagram showing an architecture of a communication system according to embodiments of the present invention. As shown in FIG. 1, the communication system 100 includes a terminal 101, a network device 102.

In some embodiments, the terminal 101 includes, for example, at least one of a mobile phone, a wearable device, an Internet of Things device, a car with a communication function, a smart car, a tablet computer (Pad), a computer with a wireless transceiver function, a virtual reality (VR) terminal, an augmented reality (AR) terminal, a wireless terminal in industrial control, a wireless terminal in self-driving, a wireless terminal in remote medical surgery, a wireless terminal in smart grid, a wireless terminal in transportation safety, a wireless terminal in smart city, or a wireless terminal in a smart home, but is not limited thereto.

In some embodiments, the network device 102 may include at least one of an access network device or a core network device.

In some embodiments, the access network device for example is a node or device that connects a terminal to a wireless network. The access network device may include at least one of an evolved NodeB (eNB), a next generation eNB (ng-eNB), a next generation NodeB (gNB), a node B (NB), a home node B (HNB), a home evolved nodeB (HeNB), a wireless backhaul device, a radio network controller (RNC), a base station controller (BSC), a base transceiver station (BTS), a base band unit (BBU), or a mobile switching center in a 5G communication system, a base station, an open base station (Open RAN), or a cloud base station (Cloud RAN) in a 6G communication system, a base station in other communication systems, or an access node in a Wi-Fi system, but is not limited thereto.

In some embodiments, the technical solutions of the present invention may be applicable to the Open RAN architecture. In this case, interfaces between access network devices or within the access network device involved in embodiments of the present invention may be internal interfaces of the Open RAN, and processes and information interactions between these internal interfaces may be implemented through software or programs.

In some embodiments, the access network device may be composed of a central unit (CU) and distributed units (DUs), and the CU may also be referred to as a control unit. The CU-DU structure allows to split protocol layers of the access network device, with functions of some protocol layers are centrally controlled by the CU, functions of part or all of the remaining protocol layers are distributed in the DUs, and the DUs are centrally controlled by the CU, but the present invention is not limited thereto.

In some embodiments, the core network device may be a device, including a first network element, a second network element, etc., or may be a plurality of devices or a group of devices, which respectively includes all or part of the first network element, the second network element, etc. The network element may be virtual or physical. The core network may include, for example, at least one of an evolved packet core (EPC), a 5G core network (5GCN), or a next generation core (NGC).

It may be understood that the communication system described in embodiments of the present invention is for the purpose of more clearly illustrating the technical solutions of embodiments of the present invention, and does not constitute a limitation on the technical solutions proposed in embodiments of the present invention. A person of ordinary skill in the art knows that with the evolution of the system architecture and the emergence of new service scenarios, the technical solutions proposed in embodiments of the present invention are also applicable to similar technical problems.

The following embodiments of the present invention may be applied to the communication system 100 or some of entities shown in FIG. 1, but are not limited thereto. The entities shown in FIG. 1 are examples, and the communication system may include all or part of the entities in FIG. 1, or may include other entities not shown in FIG. 1, and the number and form of each kind of entity are arbitrary, the entities may be physical or virtual, and the connection relationship among the entities is an example, and these entities may be connected or disconnected with each other, and the connection may be in any manner, either a direct connection or an indirect connection, or either a wired connection or a wireless connection.

Various embodiments of the present invention may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 5G new radio (NR), Future Radio Access (FRA), New Radio Access Technology (RAT), New Radio (NR), New radio access (NX), Future generation radio access (FX), Global System for Mobile communications (GSM (registered trademark)), CDMA2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), Public Land Mobile Network (PLMN) network, Device-to-Device (D2D) system, Machine-to-Machine (M2M) system, Internet of Things (IoT) system, Vehicle-to-Everything (V2X), systems using other communication methods, next-generation systems expanded based thereon, etc. In addition, multiple systems may also be combined (for example, a combination of LTE or LTE-A and 5G) for application.

Grant-free uplink transmission, also called uplink transmission with a configured grant (physical uplink shared channel (PUSCH) transmission with a configured grant), supports two types of grant-free uplink transmission. For the first type of grant-free transmission, all parameters are configured by a network device via a higher-layer signaling (such as a radio resource control (RRC) signaling). For the second type of grant-free transmission, partial parameters are configured by the network device via a higher-layer signaling, while other scheduling-related parameters are configured by the network device via activation downlink control information (DCI).

In some embodiments, a maximum of 12 sets of grant-free uplink transmission configurations may be configured and activated for a bandwidth part (BWP), and each set of configuration is identified by an index.

In some embodiments, a period of the grant-free uplink transmission (referred to as a configured grant (CG) period for short) is configured by a higher-layer signaling, and supports up to 14*40960 symbols. In the CG period, a time-frequency resource for the first type of grant-free transmission is configured via a higher-layer signaling, and a time-frequency resource for the second type of grant-free transmission is configured via activation DCI. These time-frequency resources within the CG period may also be referred to as CG PUSCH occasions (or called CG transmission occasions, TOs for short).

In some embodiments, only one TO can be configured per CG period, or in other words, only one TO can be configured in one CG configuration. In addition, the network device will further configure the number of repeated transmissions K via a higher-layer signaling, then there will be K CG PUSCH occasions with the same configuration in the CG period.

XR (VR, AR) services require low latency and high throughput. To enhance XR services, it is proposed to enhance CG, i.e., reuse CG PUSCH occasions that are not used by the terminal. For this purpose, multiple TOs may be configured in one CG period, and the terminal may send a dynamic indication signaling to the network device to notify the base station of TOs that are "unused" by the terminal.

In some embodiments, reporting of unused transmission occasion-uplink control information (UTO-UCI) is enabled.

Indication of UTO-UCI by CG PUSCHs associated to a CG configuration, is enabled by configuration of an RRC parameter.
- FFS on whether/how to extend to multiple CG configurations.

In some embodiments, enablement of the UTO-UCI is achieved by configuration of an RRC parameter.

In some embodiments, regarding time domain resource allocation (TDRA) configuration, for the time domain resource allocation for a second type of CG configuration (multi-PUSCH CG configuration, i.e., indicating that a CG period includes multiple TOs), support:

For TDRA determination (based on NR unlicensed (NR-U) framework)

In some embodiments, for Type-1, follow the rules for DCI format 0_0 on UE specific search space.

Note: to determine the configuration of TDRA, PUSCH repetition type A is assumed for Type-1.

It is still an open issue whether repetition is supported. If it is decided repetition is not supported, it implies the corresponding repetition factor is 1.

In some embodiments, for Type-2, the TDRA table is determined by the TDRA table associated with activation DCI.

Note: the DCI format for activation DCI with pusch-RepTypeA is applicable.

It is still an open issue whether repetition is supported. If it is decided repetition is not supported, it implies the corresponding repetition factor is 1.

In some embodiments, N is configured by higher layer(s).

A single start and length indicator (SLIV) is determined from TDRA.

The SLIV used for 1st PUSCH per CG period.

PUSCH is used in each of N consecutive slots per CG period

Note: N is configured independently from cg-nrofSlots-r16 and cg-nrofPUSCH-InSlot-r16, respectively. N configuration is independent from cgRetransmissionTimer configuration.

To determine corresponding slots for CG PUSCHs in a period of a second type of CG configuration (i.e., multi-PUSCH CG configuration):

For remaining PUSCHs in the period

For Type-1 and Type-2, reuse the corresponding procedures for NR-U by applying the RRC parameters N, instead of cg-nrofSlots-r16 and cg-nrofPUSCH-InSlot-r16, respectively.

Conclusion of the TDRA configuration, N refers a number of TOs in the CG period.

For the second type of CG configuration where multiple TOs are included in the CG period and the first type of CG configuration which is different from the second type of CG configuration, the terminal cannot directly determine whether the CG configuration configured by the network device is the first type of CG configuration or the second type of CG configuration.

In embodiments of the present invention, the terminal distinguishes whether the CG configuration configured by the network device is the first type of CG configuration (e.g., the CG configuration in Release 15/Release 16) or the second type of CG configuration (multi-PUSCHs CG configuration), which is beneficial for the terminal to determine some execution modes, for example, to determine which formula is selected for calculating a hybrid automatic repeat request (HARQ) process identifier (HP ID), because the formula for calculating an HP ID corresponding to the PUSCH for the first type of CG configuration is different from the formula for calculating an HP ID corresponding to the PUSCH for the second type of CG configuration, and the two formulas cannot be mixed; for another example, to control the sending of UTO-UCI (unused transmission occasion-uplink control information).

FIG. 2 is a schematic interactive diagram of an information determination method according to embodiments of the present invention. As shown in FIG. 2, embodiments of the present invention relate to an information determination method, and the method includes the following steps.

S21: a network device sends first indication information to a terminal, the first indication information indicates that a configured grant (CG) configuration is a first type of CG configuration or a second type of CG configuration, and a CG period indicated by the second type of CG configuration includes multiple CG transmission occasions (TOs).

In embodiments of the present invention, the network device may send the first indication information to the terminal.

In some embodiments, the terminal receives the first indication information from the network device, the first indication information indicates that the configured grant (CG) configuration is the first type of CG configuration or the second type of CG configuration, and the CG period indicated by the second type of CG configuration includes multiple TOs.

In some embodiments, the network device may send the first indication information to the terminal while sending configuration information including the CG configuration to the terminal, or may send the first indication information to the terminal after sending configuration information including the CG configuration to the terminal, which is not limited in embodiments of the present invention.

In some embodiments, the configuration information including the CG configuration sent by the network device to the terminal may include the first indication information.

In some embodiments, the first indication information is used to indicate that the configured grant (CG) configuration is the first type of CG configuration or the second type of CG configuration.

In some embodiments, the name of the first indication information is not limited, and it may also be, for example, "first information" or the like.

In some embodiments, the CG period indicated by the second type of CG configuration includes multiple TOs.

In some embodiments, the first type of CG configuration is different from the second type of CG configuration.

In some embodiments, a CG period indicated by the first type of CG configuration includes only one TO.

It can be understood that the first indication information is used to indicate that the configured grant (CG) configuration is the first type of CG configuration or the second type of CG configuration, and the first indication information may use a variety of manners to indicate that the CG configuration is the first type of CG configuration or the second type of CG configuration.

In some embodiments, the first indication information may indicate that the CG configuration is the first type of CG configuration.

In some embodiments, the first indication information may indicate that the CG configuration is the second type of CG configuration.

In some embodiments, the first indication information includes a first parameter, and the first indication information indicates that the CG configuration is the second type of CG configuration; or
the first indication information does not include a first parameter, and the first indication information indicates that the CG configuration is the first type of CG configuration; or
the first indication information includes a first parameter, and the first indication information indicates that the CG configuration is the first type of CG configuration; or
the first indication information does not include a first parameter, and the first indication information indicates that the CG configuration is the second type of CG configuration; or
the first indication information includes a second parameter, the second parameter is a specific value, and the first indication information indicates that the CG configuration is the second type of CG configuration; or
the first indication information includes a second parameter, the second parameter is not a specific value, and the first indication information indicates that the CG configuration is the first type of CG configuration; or
the first indication information includes a second parameter, the second parameter is a specific value, and the first indication information indicates that the CG configuration is the first type of CG configuration; or
the first indication information includes a second parameter, the second parameter is not a specific value, and the first indication information indicates that the CG configuration is the second type of CG configuration; or
the first indication information includes a second parameter, the second parameter is a specific identifier, and the first indication information indicates that the CG configuration is the second type of CG configuration; or
the first indication information includes a second parameter, the second parameter is not a specific identifier, and the first indication information indicates that the CG configuration is the first type of CG configuration; or
the first indication information includes a second parameter, the second parameter is a specific identifier, and the first indication information indicates that the CG configuration is the first type of CG configuration; or
the first indication information includes a second parameter, the second parameter is not a specific identifier, and the first indication information indicates that the CG configuration is the second type of CG configuration; or
the first indication information includes a third parameter, the third parameter is an integer greater than 1, and the first indication information indicates that the CG configuration is the second type of CG configuration; or
the first indication information includes a third parameter, the third parameter is 1, and the first indication information indicates that the CG configuration is the first type of CG configuration.

In some embodiments, in a case where the first indication information includes the first parameter, the first indication information indicates that the CG configuration is the second type of CG configuration.

In some embodiments, in a case where the first indication information does not include the first parameter, the first indication information indicates that the CG configuration is the second type of CG configuration.

In some embodiments, in a case where the first indication information includes the first parameter, the first indication information indicates that the CG configuration is the first type of CG configuration.

In some embodiments, in a case where the first indication information does not include the first parameter, the first indication information indicates that the CG configuration is the first type of CG configuration.

In some embodiments, in a case where the first indication information includes the second parameter, and the second parameter is the specific value, the first indication information indicates that the CG configuration is the second type of CG configuration.

In some embodiments, in a case where the first indication information includes the second parameter, and the second parameter is not the specific value, the first indication information indicates that the CG configuration is the first type of CG configuration.

In some embodiments, in a case where the first indication information includes the second parameter, and the second parameter is the specific value, the first indication information indicates that the CG configuration is the first type of CG configuration.

In some embodiments, in a case where the first indication information includes the second parameter, and the second parameter is not the specific value, the first indication information indicates that the CG configuration is the second type of CG configuration.

For example, the specific value may be "2" or an invalid value, etc., which is not limited in embodiments of the present invention.

In some embodiments, in a case where the first indication information includes the second parameter, and the second parameter is the specific identifier, the first indication information indicates that the CG configuration is the second type of CG configuration.

In some embodiments, in a case where the first indication information includes the second parameter, and the second parameter is not the specific identifier, the first indication information indicates that the CG configuration is the first type of CG configuration.

In some embodiments, in a case where the first indication information includes the second parameter, and the second parameter is the specific identifier, the first indication information indicates that the CG configuration is the first type of CG configuration.

In some embodiments, in a case where the first indication information includes the second parameter, and the second parameter is not the specific identifier, the first indication information indicates that the CG configuration is the second type of CG configuration.

For example, the specific identifier may be an invalid identifier, etc., which is not limited in embodiments of the present invention.

In some embodiments, in a case where the first indication information includes the third parameter, and the third parameter is the integer greater than 1, the first indication information indicates that the CG configuration is the second type of CG configuration.

In some embodiments, in a case where the first indication information includes the third parameter, and the third parameter is 1, the first indication information indicates that the CG configuration is the first type of CG configuration.

It should be noted that the first parameter, the second parameter or the third parameter included in the first indication information may adopt an existing relevant parameter, or new parameters may be introduce therefor, and embodiments of the present invention do not impose specific limitation thereon.

It should be noted that the above embodiments are not exhaustive, but are only some embodiments of the present invention as examples, and the above embodiments may be implemented individually, or several embodiments may be implemented in combination. The above embodiments are explanative and are not intended to limit the scope of protection of the embodiments of the present invention.

In some embodiments, sending, by the network device, the first indication information to the terminal includes: sending an RRC signaling to the terminal, and the RRC signaling includes the first indication information.

In embodiments of the present invention, sending, by the network device, the first indication information to the terminal may be that the network device sends the RRC signaling to the terminal, and the RRC signaling includes the first indication information. In this way, an existing signaling is used to send the first indication information, which reduces signaling overhead.

In some embodiments, the multiple TOs included in the CG period are TOs configured by the network device, or the multiple TOs included in the CG period are valid TOs, and time-frequency resources corresponding to the valid TOs do not conflict with a downlink resource.

In embodiments of the present invention, in the case where the first indication information indicates that the CG configuration is the second type of CG configuration, the multiple TOs in the CG period indicated by the CG configuration may be TOs configured by the network device.

In embodiments of the present invention, in the case where the first indication information indicates that the CG configuration is the second type of CG configuration, the multiple TOs in the CG period indicated by the CG configuration may all be valid TOs.

It can be understood that the time-frequency resources corresponding to the valid TOs do not conflict with the downlink resource. That is, the terminal may use the valid TOs.

In some embodiments, the downlink resource includes at least one of:
a first downlink resource indicated by time division duplex (TDD) uplink and downlink common configuration (tdd-UL-DL-ConfigurationCommon);
a second downlink resource indicated by TDD uplink and downlink dedicated configuration (tdd-UL-DL-ConfigurationDedicated); or
a third downlink resource occupied by a synchronization/physical broadcast channel block (SSB).

S22: the network device sends second indication information to the terminal, the second indication information indicates whether the terminal needs to send specific uplink control information, and the specific uplink control information indicates whether a TO is used subsequently.

In embodiments of the present invention, the network device may send the second indication information to the terminal.

In some embodiments, the terminal receives the second indication information from the network device, the second indication information indicates whether the terminal needs to send the specific uplink control information, and the specific uplink control information indicates whether a TO is used subsequently.

In this case, if the second indication information indicates that the terminal needs to send the specific uplink control information, the terminal may send the specific uplink control information after receiving the second indication information; if the second indication information indicates that the terminal does not need to send the specific uplink control information, the terminal may not send the specific uplink control information after receiving the second indication information.

In some embodiments, the second indication information indicates whether the terminal needs to send the specific uplink control information.

In some embodiments, the name of the second indication information is not limited, and it may also be, for example, "first information" or the like.

In some embodiments, the specific uplink control information indicates whether the TO is used subsequently.

It can be understood that the second indication information indicates whether the terminal needs to send the specific uplink control information, and the first indication information may use a variety of manners to indicate whether the terminal needs to send the specific uplink control information.

In some embodiments, the second indication information may indicate that the terminal needs to send the specific uplink control information.

In some embodiments, the second indication information may indicate that the terminal does not need to send the specific uplink control information.

In some embodiments, the second indication information includes a fourth parameter, and the second indication information indicates that the terminal needs to send the specific uplink control information; or
the second indication information includes a fourth parameter, and the second indication information indicates that the terminal does not need to send the specific uplink control information; or
the second indication information does not include a fourth parameter, and the second indication information indicates that the terminal needs to send the specific uplink control information; or
the second indication information does not include a fourth parameter, and the second indication information indicates that the terminal does not need to send the specific uplink control information.

In some embodiments, in a case where the second indication information includes the fourth parameter, the second indication information indicates that the terminal needs to send the specific uplink control information.

In some embodiments, in a case where the second indication information includes the fourth parameter, the second indication information indicates that the terminal does not need to send the specific uplink control information.

In some embodiments, in a case where the second indication information does not include the fourth parameter, the second indication information indicates that the terminal needs to send the specific uplink control information.

In some embodiments, in a case where the second indication information does not include the fourth parameter, the second indication information indicates that the terminal does not need to send the specific uplink control information.

It should be noted that the fourth parameter included in the second indication information may adopt an existing related parameter, or a new parameter may be introduced therefor, and embodiments of the present invention does not impose any specific limitation thereon.

It should be noted that the above embodiments are not exhaustive, but are only some embodiments of the present invention as examples, and the above embodiments may be implemented individually, or several embodiments may be implemented in combination. The above embodiments are explanative and are not intended to limit the scope of protection of embodiments of the present invention.

In some embodiments, sending, by the network device, the second indication information to the terminal includes: sending an RRC signaling including the second indication information to the terminal; or sending a dynamic signaling including the second indication information to the terminal; or sending a media access control (MAC)-control element (CE) including the second indication information to the terminal.

In embodiments of the present invention, sending, by the network device, the second indication information to the terminal may be that the network device sends the RRC signaling to the terminal, and the RRC signaling includes the second indication information. In this way, an existing signaling is used to send the second indication information, which reduces signaling overhead.

In embodiments of the present invention, sending, by the network device, the second indication information to the terminal may be that the network device sends the dynamic signaling to the terminal, and the dynamic signaling includes the second indication information. In this way, an existing signaling is used to send the second indication information, which reduces signaling overhead.

In embodiments of the present invention, sending, by the network device, the second indication information to the terminal may be that the network device sends the MAC CE to the terminal, and the MAC CE includes the second indication information. In this way, an existing signaling is used to send the second indication information, which reduces signaling overhead.

It should be noted that the network device may also use other signaling messages to send the second indication information to the terminal. For example, the network device may use a new signaling message to send the second indication information to the terminal. Embodiments of the present invention do not impose any specific limitation thereon.

S23: in a case where the second indication information indicates that the terminal needs to send the specific uplink control information, the terminal sends the specific uplink control information to the network device.

In embodiments of the present invention, the terminal receives the second indication information sent by the network device. In the case where the second indication information indicates that the terminal needs to send the specific uplink control information, the terminal may send the specific uplink control information to the network device.

In some embodiments, a situation of whether a first TO is used as indicated by the specific uplink control information is consistent with a situation of the first TO indicated by specific uplink control information reported last time, or a situation of whether a first TO is used as indicated by the specific uplink control information cannot be modified by next specific uplink control information to be reported next time.

In some embodiments, in a case where the specific uplink control information indicates a state of the first TO is used, next specific uplink control information sent next time also indicates the state of the first TO is used; or
in a case where the specific uplink control information indicates a state of the first TO is unused, next specific uplink control information sent next time also indicates the state of the first TO is unused; or
in a case where the specific uplink control information indicates a state of the first TO is used, subsequent specific uplink control information sent thereafter also indicates the state of the first TO is used; or
in a case where the specific uplink control information indicates a state of the first TO is unused, subsequent specific uplink control information sent thereafter also indicates the state of the first TO is unused; or
in a case where the specific uplink control information indicates a state of the first TO is unused, the terminal is not allowed to modify the state of the first TO; or
in a case where the specific uplink control information indicates a state of the first TO is used, the terminal is not allowed to modify the state of the first TO.

In embodiments of the present invention, in the case where the specific uplink control information indicates the state of the first TO is used, next specific uplink control information sent next time also indicates the state of the first TO is used.

In embodiments of the present invention, in the case where the specific uplink control information indicates the state of the first TO is unused, next specific uplink control information sent next time also indicates the state of the first TO is unused.

In embodiments of the present invention, in the case where the specific uplink control information indicates the state of the first TO is used, subsequent specific uplink control information sent thereafter also indicates the state of the first TO is used.

In embodiments of the present invention, in the case where the specific uplink control information indicates the state of the first TO is unused, subsequent specific uplink control information sent thereafter also indicates the state of the first TO is unused.

In embodiments of the present invention, in the case where the specific uplink control information indicates the state of the first TO is unused, the terminal is not allowed to modify the state of the first TO.

In embodiments of the present invention, in the case where the specific uplink control information indicates the state of the first TO is used, the terminal is not allowed to modify the state of the first TO.

In some embodiments, in a case where the network device determines that a situation of whether a TO is used subsequently as indicated by the specific uplink control information is inconsistent with a situation indicated by specific uplink control information reported last time, it is determined to adopt the specific uplink control information reported last time.

In some embodiments, in a case where the specific uplink control information indicates the state of the first TO is used, the network device ignores an indication for the first TO from subsequent specific uplink control information; or
in a case where the specific uplink control information indicates the state of the first TO is unused, the network device ignores an indication for the first TO from subsequent specific uplink control information.

In embodiments of the present invention, in the case where the specific uplink control information indicates the state of the first TO is used, the network device ignores the indication for the first TO from the subsequent specific uplink control information.

In embodiments of the present invention, in a case where the specific uplink control information indicates the state of the first TO is unused, the network device ignores the indication for the first TO from the subsequent specific uplink control information

For example, in a case where the network device receives the specific uplink control information reported by the terminal, which indicates that the first TO is used, while the specific uplink control information reported by the terminal last time indicates that the first TO is unused, the network device may determine to use the specific uplink control information reported by the terminal last time to determine that the first TO is unused.

S24: the network device sends configuration information to the terminal, and the configuration information includes a specific CG configuration for the second type of CG configuration.

In embodiments of the present invention, the network device may send the configuration information to the terminal, and the configuration information includes the specific CG configuration for the second type of CG configuration.

In some embodiments, the network device sends the configuration information to the terminal, and the terminal determines to activate the specific CG configuration. The configuration information may be sent to the terminal in a variety of ways.

In some embodiments, the network device sends the configuration information to the terminal via an RRC signaling, and may configure at least one set of CG resources for the terminal on a BWP, and one set of CG resources may also be called one CG period or one CG configuration. The terminal may determine that the specific CG configuration included in the configuration information has been activated, and the terminal may perform uplink transmission by itself at a TO in any of all the CG configurations within the CG period configured by the network device.

In some embodiments, the network device configures partial information of at least one CG configuration for the terminal on a BWP via an RRC signaling, and the network device notifies the terminal of the remaining information of the CG configuration via a dynamic signaling DCI. After the network device activates the CG configuration via the dynamic signaling DCI, the terminal may determine that the specific CG configuration included in the configuration information has been activated, and the terminal may perform uplink transmission by itself at a TO in the CG configuration within the CG period configured by the network device.

In some embodiments, the specific CG configuration does not include a specific parameter, and the specific parameter is a number of slots for configuring PUSCH in the CG period or a number of TOs configured in the CG period.

In embodiments of the present invention, the configuration information sent by the network device to the terminal includes the specific CG configuration for the second type of CG configuration, that is, the CG period indicated by the specific CG configuration includes multiple TOs.

The specific CG configuration does not include the specific parameter, and the specific parameter is a number of slots for configuring PUSCH in the CG period or the number of TO configured in the CG period.

In some embodiments, the terminal determines that the specific CG configuration does not include the specific parameter, and it is determined by default that the specific parameter is n, where n is predefined by a protocol; or
the terminal determines that the specific CG configuration does not include the specific parameter, and determines that the specific CG configuration is not activated; or
the terminal determines that the specific CG configuration does not include the specific parameter, and determines that the specific CG configuration is activated as the first type of CG configuration, and only a first TO among multiple TOs indicated by the specific CG configuration is activated and available,
the specific parameter is a number of slots for configuring PUSCH in the CG period or a number of TOs configured in the CG period.

In some embodiments, in the case where the specific CG configuration does not include the specific parameter, the terminal may determine by default that the specific parameter is 1, indicating that only the first TO among the multiple TOs indicated by the specific CG configuration is available.

In some embodiments, in the case where the specific CG configuration does not include the specific parameter, the terminal may determine by default that the specific parameter is 2, indicating that the multiple TOs indicated by the specific CG configuration are all available.

In some embodiments, in the case where the specific CG configuration does not include the specific parameter, the terminal may determine by default that the specific parameter is 3, indicating that the multiple TOs indicated by the specific CG configuration are all available.

In some embodiments, in the case where the specific CG configuration does not include the specific parameter, the terminal may determine by default that the specific parameter is 4, indicating that the multiple TOs indicated by the specific CG configuration are all available.

In some embodiments, in the case where the specific CG configuration does not include the specific parameter, the terminal may determine by default that the specific parameter is 5, indicating that the multiple TOs indicated by the specific CG configuration are all available.

In some embodiments, in the case where the specific CG configuration does not include the specific parameter, the terminal may determine by default that the specific parameter is 6, indicating that the multiple TOs indicated by the specific CG configuration are all available.

In some embodiments, in the case where the specific CG configuration does not include the specific parameter, the terminal may determine by default that the specific parameter is 7, indicating that the multiple TOs indicated by the specific CG configuration are all available.

In some embodiments, in the case where the specific CG configuration does not include the specific parameter, the terminal may determine by default that the specific parameter is 8, indicating that the multiple TOs indicated by the specific CG configuration are all available.

In some embodiments, in the case where the specific CG configuration does not include the specific parameter, the terminal may determine that the specific CG configuration is not activated. In this case, the terminal cannot use the un-activated specific CG configuration.

In some embodiments, in the case where the specific CG configuration does not include the specific parameter, the terminal may determine that the specific CG configuration is activated as the first type of CG configuration, and only the first TO among the multiple TOs indicated by the specific CG configuration is available.

In some embodiments, the specific parameter is a number of slots for configuring PUSCH within the CG period.

In some embodiments, the specific parameter is a number of TOs configured within the CG period.

It should be noted that the above embodiments are not exhaustive, but are only some embodiments of the present invention as examples, and the above embodiments may be implemented individually, or several embodiments may be implemented in combination. The above embodiments are explanative and are not intended to limit the scope of protection of embodiments of the present invention.

In some embodiments, the name of information or the like is not limited to those recorded in embodiments, and terms such as "information", "message", "signal", "signaling", "report", "configuration", "indication", "instruction", "command", "channel", "parameter", "domain", "field", "symbol", "code element", "codebook", "codeword", "codepoint", "bit", "data", "program", and "chip" may be used interchangeably.

In some embodiments, terms such as "obtain", "acquire", "get", "receive", "transmit", "bidirectional transmission", "send and/or receive" are interchangeable, and may be interpreted as receiving from another entity, obtaining from a protocol, obtaining from a higher layer, obtaining by self-processing, autonomous implementation, etc.

In some embodiments, terms such as "send", "transmit", "report", "issue", "transmission", "bidirectional transmission", "send and/or receive" may be used interchangeably.

In some embodiments, terms such as "certain", "predetermined", "preset", "set", "indicated", "specific", "any", and "first" may be interchangeable, and terms such as "certain A", "predetermined A", "preset A", "set A", "indicated A", "specific A", "any A", and "first A" may be interpreted as "A" pre-defined in a protocol, etc., or interpreted as "A" obtained through setting, configuration, or indication, etc., and may also be interpreted as "specific A", "certain A", "any A", or "first A", etc., but the present invention is not limited thereto.

The communication method involved in embodiments of the present invention may include at least one of S21 to S24. For example, S21 may be implemented as an independent embodiment, S22 may be implemented as an independent embodiment, S23 may be implemented as an independent embodiment, S24 may be implemented as an independent embodiment, S21+S22 may be implemented as an independent embodiment, S22+S23 may be implemented as an independent embodiment, S21+S24 may be implemented as an independent embodiment, and S21+S22+S23 may be implemented as an independent embodiment, but the present invention is not limited thereto.

In some embodiments, S21 and S22 may be implemented in an exchanged order or simultaneously. S21 and S24 may be implemented in an exchanged order or simultaneously.

In some embodiments, S22, S23, and S24 are optional, and one or more of these steps may be omitted or replaced in different embodiments.

In some embodiments, S21 and S24 are optional, and one or more of these steps may be omitted or replaced in different embodiments.

In some embodiments, reference may be made to other optional implementations recorded before or after the description corresponding to FIG. 2.

FIG. 3A is a schematic flowchart of an information determination method according to embodiments of the present invention. As shown in FIG. 3A, embodiments of the present invention relate to an information determination method, which is performed by a terminal and includes the following step.

S311: first indication information is obtained, the first indication information indicates that a configured grant (CG) configuration is a first type of CG configuration or a second type of CG configuration, and a CG period indicated by the second type of CG configuration includes multiple TOs.

In some embodiments, the terminal receives the first indication information from the network device, but the present invention is not limited thereto, and the terminal may also receive the first indication information from other entities.

In some embodiments, the terminal obtains the first indication information specified by a protocol.

In some embodiments, the terminal obtains the first indication information from upper layer(s).

In some embodiments, the terminal performs processing to obtain the first indication information.

In some embodiments, S311 is omitted, and the terminal autonomously implements the function indicated by the first indication information, or the above function is default or acquiescent.

In some embodiments, the first indication information includes a first parameter, and the first indication information indicates that the CG configuration is the second type of CG configuration; or
the first indication information does not include a first parameter, and the first indication information indicates that the CG configuration is the first type of CG configuration; or
the first indication information includes a first parameter, and the first indication information indicates that the CG configuration is the first type of CG configuration; or
the first indication information does not include a first parameter, and the first indication information indicates that the CG configuration is the second type of CG configuration; or
the first indication information includes a second parameter, the second parameter is a specific value, and the first indication information indicates that the CG configuration is the second type of CG configuration; or
the first indication information includes a second parameter, the second parameter is not a specific value, and the first indication information indicates that the CG configuration is the first type of CG configuration; or
the first indication information includes a second parameter, the second parameter is a specific value, and the first indication information indicates that the CG configuration is the first type of CG configuration; or
the first indication information includes a second parameter, the second parameter is not a specific value, and the first indication information indicates that the CG configuration is the second type of CG configuration; or
the first indication information includes a second parameter, the second parameter is a specific identifier, and the first indication information indicates that the CG configuration is the second type of CG configuration; or
the first indication information includes a second parameter, the second parameter is not a specific identifier, and the first indication information indicates that the CG configuration is the first type of CG configuration; or
the first indication information includes a second parameter, the second parameter is a specific identifier, and the first indication information indicates that the CG configuration is the first type of CG configuration; or
the first indication information includes a second parameter, the second parameter is not a specific identifier, and the first indication information indicates that the CG configuration is the second type of CG configuration; or
the first indication information includes a third parameter, the third parameter is an integer greater than 1, and the first indication information indicates that the CG configuration is the second type of CG configuration; or
the first indication information includes a third parameter, the third parameter is 1, and the first indication information indicates that the CG configuration is the first type of CG configuration.

In some embodiments, receiving, by the terminal, the first indication information from the network device includes: receiving a radio resource control (RRC) signaling sent by the network device, and the RRC signaling includes the first indication information.

In some embodiments, the multiple TOs included in the CG period are configured by the network device, or the multiple TOs included in the CG period are valid TOs, and the time-frequency resources corresponding to the valid TOs do not conflict with a downlink resource.

In some embodiments, the downlink resource includes at least one of:
a first downlink resource indicated by time division duplex (TDD) uplink and downlink common configuration (tdd-UL-DL-ConfigurationCommon);
a second downlink resource indicated by TDD uplink and downlink dedicated configuration (tdd-UL-DL-ConfigurationDedicated); or
a third downlink resource occupied by a synchronization/physical broadcast channel block (SSB).

It should be noted that for optional implementation manners of S311 reference may be made to the optional implementation manners of S21 in FIG. 2 or other related parts in embodiments involved in FIG. 2, which will not be described again here.

With embodiments of the present invention, the terminal may determine whether the CG configuration is the first type of CG configuration or the second type of CG configuration based on the first indication information, which is beneficial for the terminal to subsequently determine the corresponding execution method according to different types of CG configurations to ensure normal communication.

FIG. 3B is a schematic flowchart of an information determination method according to embodiments of the present invention. As shown in FIG. 3B, embodiments of the present invention relate to an information determination method, which is performed by a terminal and includes the one of more of the following steps.

S321: second indication information is obtained, the second indication information indicates whether the terminal needs to send specific uplink control information, and the specific uplink control information indicates whether a TO is used.

In some embodiments, the terminal receives the second indication information from the network device, but the present invention is not limited thereto, and the terminal may also receive the first information from another entity.

In some embodiments, the terminal obtains the second indication information specified by a protocol.

In some embodiments, the terminal obtains the second indication information from upper layer(s).

In some embodiments, the terminal performs processing to obtain the second indication information.

In some embodiments, S321 is omitted, and the terminal autonomously implements the function indicated by the second indication information, or the above function is default or acquiescent.

In some embodiments, the second indication information includes a fourth parameter, and the second indication information indicates that the terminal needs to send the specific uplink control information; or
the second indication information includes a fourth parameter, and the second indication information indicates that the terminal does not need to send the specific uplink control information; or
the second indication information does not include a fourth parameter, and the second indication information indicates that the terminal needs to send the specific uplink control information; or
the second indication information does not include a fourth parameter, and the second indication information indicates that the terminal does not need to send the specific uplink control information.

S322: in a case where the second indication information indicates that the terminal needs to send the specific uplink control information, the specific uplink control information is sent to the network device.

In some embodiments, a situation of whether a first TO is used as indicated by the specific uplink control information is consistent with a situation of the first TO indicated by specific uplink control information sent last time, or a situation of whether a first TO is used as indicated by the specific uplink control information cannot be modified by next specific uplink control information to be sent next time.

In some embodiments, in a case where the specific uplink control information indicates a state of the first TO is used, next specific uplink control information sent next time also indicates the state of the first TO is used; or
in a case where the specific uplink control information indicates a state of the first TO is unused, next specific uplink control information sent next time also indicates the state of the first TO is unused; or
in a case where the specific uplink control information indicates a state of the first TO is used, subsequent specific uplink control information sent thereafter also indicates the state of the first TO is used; or
in a case where the specific uplink control information indicates a state of the first TO is unused, subsequent specific uplink control information sent thereafter also indicates the state of the first TO is unused; or
in a case where the specific uplink control information indicates a state of the first TO is unused, the terminal is not allowed to modify the state of the first TO; or
in a case where the specific uplink control information indicates a state of the first TO is used, the terminal is not allowed to modify the state of the first TO.

In some embodiments, receiving, by the terminal, the second indication information from the network device includes: receiving an RRC signaling from the network device, and the RRC signaling includes the second indication information. Alternatively, a dynamic signaling is sent to the terminal, and the dynamic signaling includes the second indication information. Alternatively, a MAC CE is sent to the terminal, and the MAC CE includes the second indication information.

It should be noted that for the optional implementation manners of S321 and S322 reference may be made to the optional implementation manners of S22 and S23 in FIG. 2, or other related parts in embodiments involved in FIG. 2, which will not be described again here.

In some embodiments, S322 is optional, and one or more of these steps may be omitted or replaced in different embodiments.

With embodiments of the present invention, the terminal may determine, based on the second indication information, whether it needs to send the specific uplink control information, and the specific uplink control information indicates whether a TO is used, to ensure normal communication.

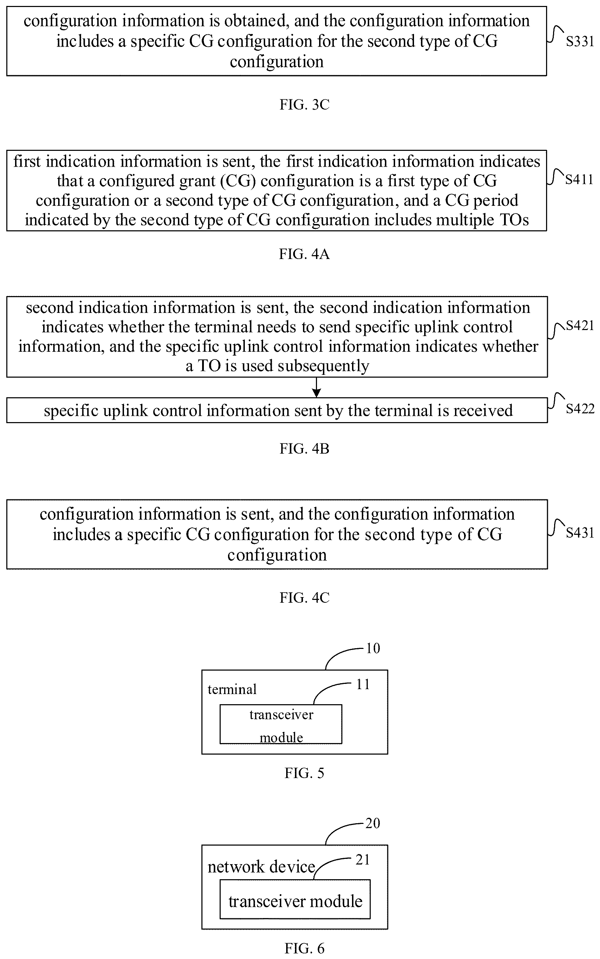

FIG. 3C is a schematic flowchart of an information determination method according to embodiments of the present invention. As shown in FIG. 3C, embodiments of the present invention relate to an information determination method, which is performed by a terminal and includes the following step.

S331: configuration information is obtained, and the configuration information includes a specific CG configuration for the second type of CG configuration.

In some embodiments, the terminal receives the configuration information from the network device, but the present invention is not limited thereto, and the terminal may also receive first information sent by another entity.

In some embodiments, the terminal obtains the configuration information specified by a protocol.

In some embodiments, the terminal obtains the configuration information from upper layer(s).

In some embodiments, the terminal performs processing to obtain the configuration information.

In some embodiments, S331 is omitted, and the terminal autonomously implements the function indicated by the configuration information, or the above function is default or acquiescent.

In some embodiments, it is determined that the specific CG configuration does not include the specific parameter, and it is determined by default that the specific parameter is n, where n is predefined by a protocol; or
it is determined that the specific CG configuration does not include a specific parameter, and it is determined that the specific CG configuration is not activated; or
it is determined that the specific CG configuration does not include a specific parameter, and it is determined that the specific CG configuration is activated as the first type of CG configuration, and only a first TO among multiple TOs indicated by the specific CG configuration is available,
the specific parameter is a number of slots for configuring PUSCH in the CG period or a number of TOs configured in the CG period.

It should be noted that for optional implementation manners of S331 reference may be made to the optional implementation manners of S24 in FIG. 2 or other related parts in embodiments involved in FIG. 2, which will not be described again here.

With embodiments of the present invention, the terminal may determine the specific CG configuration for the second type of CG configuration based on the configuration information, and perform different actions according to different contents indicated by the specific CG configuration, to ensure the normal communication.

FIG. 4A is a schematic flowchart of an information determination method according to embodiments of the present invention. As shown in FIG. 4A, embodiments of the present invention relate to an information determination method, which is performed by a network device and includes the following step.

S411: first indication information is sent, the first indication information indicates that a configured grant (CG) configuration is a first type of CG configuration or a second type of CG configuration, and a CG period indicated by the second type of CG configuration includes multiple TOs.

In some embodiments, the network device may sent the first indication information to a terminal.

In some embodiments, the first indication information includes a first parameter, and the first indication information indicates that the CG configuration is the second type of CG configuration; or
the first indication information does not include a first parameter, and the first indication information indicates that the CG configuration is the first type of CG configuration; or
the first indication information includes a first parameter, and the first indication information indicates that the CG configuration is the first type of CG configuration; or
the first indication information does not include a first parameter, and the first indication information indicates that the CG configuration is the second type of CG configuration; or
the first indication information includes a second parameter, the second parameter is a specific value, and the first indication information indicates that the CG configuration is the second type of CG configuration; or
the first indication information includes a second parameter, the second parameter is not a specific value, and the first indication information indicates that the CG configuration is the first type of CG configuration; or
the first indication information includes a second parameter, the second parameter is a specific value, and the first indication information indicates that the CG configuration is the first type of CG configuration; or
the first indication information includes a second parameter, the second parameter is not a specific value, and the first indication information indicates that the CG configuration is the second type of CG configuration; or
the first indication information includes a second parameter, the second parameter is a specific identifier, and the first indication information indicates that the CG configuration is the second type of CG configuration; or
the first indication information includes a second parameter, the second parameter is not a specific identifier, and the first indication information indicates that the CG configuration is the first type of CG configuration; or
the first indication information includes a second parameter, the second parameter is a specific identifier, and the first indication information indicates that the CG configuration is the first type of CG configuration; or
the first indication information includes a second parameter, the second parameter is not a specific identifier, and the first indication information indicates that the CG configuration is the second type of CG configuration; or
the first indication information includes a third parameter, the third parameter is an integer greater than 1, and the first indication information indicates that the CG configuration is the second type of CG configuration; or
the first indication information includes a third parameter, the third parameter is 1, and the first indication information indicates that the CG configuration is the first type of CG configuration.

In some embodiments, sending, by the network device, the first indication information to the terminal includes: sending an RRC signaling to the terminal, and the RRC signaling includes the first indication information.

In some embodiments, the multiple TOs included in the CG period are configured by the network device, or the multiple TOs included in the CG period are valid TOs, and the time-frequency resources corresponding to the valid TOs do not conflict with a downlink resource.

In some embodiments, the downlink resource includes at least one of:
a first downlink resource indicated by time division duplex (TDD) uplink and downlink common configuration (tdd-UL-DL-ConfigurationCommon);
a second downlink resource indicated by TDD uplink and downlink dedicated configuration (tdd-UL-DL-ConfigurationDedicated); or
a third downlink resource occupied by a synchronization/physical broadcast channel block (SSB).

It should be noted that for optional implementation manners of S411 reference may be made to the optional implementation manners of S21 in FIG. 2 or other related parts in embodiments involved in FIG. 2, which will not be described again here.

With embodiments of the present invention, the network device sends the first indication information, the first indication information indicates that the configured grant (CG) configuration is the first type of CG configuration or the second type of CG configuration, and the CG period indicated by the second type of CG configuration includes multiple TOs, to ensure the normal communication.

FIG. 4B is a schematic flowchart of an information determination method according to embodiments of the present invention. As shown in FIG. 4B, embodiments of the present invention relate to an information determination method, which is performed by a network device and includes one of more of the following steps.

S421: second indication information is sent, the second indication information indicates whether the terminal needs to send specific uplink control information, and the specific uplink control information indicates whether a TO is used subsequently.

In some embodiments, the network device may send the second indication information to the terminal.

In some embodiments, the second indication information includes a fourth parameter, and the second indication information indicates that the terminal needs to send the specific uplink control information; or
the second indication information includes a fourth parameter, and the second indication information indicates that the terminal does not need to send the specific uplink control information; or
the second indication information does not include a fourth parameter, and the second indication information indicates that the terminal needs to send the specific uplink control information; or
the second indication information does not include a fourth parameter, and the second indication information indicates that the terminal does not need to send the specific uplink control information.

In some embodiments, sending, by the network device, the second indication information to the terminal includes: sending an RRC signaling including the second indication information to the terminal; or sending a dynamic signaling including the second indication information to the terminal; or sending a MAC CE including the second indication information to the terminal.

S422: specific uplink control information sent by the terminal is received.

In some embodiments, in a case where the network device determines that a situation of whether a TO is used subsequently as indicated by the specific uplink control information is inconsistent with a situation indicated by specific uplink control information sent last time, it is determined to adopt the specific uplink control information sent last time.

In some embodiments, in a case where the specific uplink control information indicates a state of a first TO is used, the network device ignores an indication for the first TO from subsequent specific uplink control information; or
in a case where the specific uplink control information indicates a state of a first TO is unused, the network device ignores an indication for the first TO from subsequent specific uplink control information.

It should be noted that for optional implementation manners of S421 and S422 reference may be made to the optional implementation manners of S22 and S23 in FIG. 2, or other related parts in embodiments involved in FIG. 2, which will not be described again here.

In some embodiments, S422 is optional, and one or more of these steps may be omitted or replaced in different embodiments.

With embodiments of the present invention, the network device sends the second indication information, the second indication information indicates whether the terminal needs to send the specific uplink control information, and the specific uplink control information indicates whether the TO is used subsequently, thereby ensuring the normal communication.

FIG. 4C is a schematic flowchart of an information determination method according to embodiments of the present invention. As shown in FIG. 4C, embodiments of the present invention relate to an information determination method, which is performed by a network device and includes the following step.

S431: configuration information is sent, the configuration information includes a specific CG configuration for the second type of CG configuration.

In some embodiments, the network device may send the configuration information to the terminal.

In some embodiments, the specific CG configuration does not include a specific parameter, and the specific parameter is a number of slots for configuring PUSCH in the CG period or a number of TOs configured in the CG period.

It should be noted that for optional implementation manners of S431 reference may be made to the optional implementation manners of S24 in FIG. 2 or other related parts in embodiments involved in FIG. 2, which will not be described again here.

With embodiments of the present invention, the network device may send the configuration information, the configuration information includes the specific CG configuration for the second type of CG configuration, to ensure normal communication.

To facilitate understanding of embodiments of the present invention, an example embodiment is provided.

In the example embodiment, the first type of CG configuration is a normal CG configuration, and the second type of CG configuration is a multi-PUSCHs CG configuration. Description is made with reference to an example where the network device is a base station.

The terminal distinguishes whether the CG configuration configured by the base station is the normal CG configuration (R15/16) or the multi-PUSCHs CG configuration, which is beneficial for the terminal to determine some execution modes, for example, to determine which formula is selected for calculating a hybrid automatic repeat request (HARQ) process identifier (HP ID), because the formula for calculating an HP ID corresponding to a TO (or PUSCH) for the normal CG configuration is different from the formula for calculating an HP ID corresponding to a TO (or PUSCH) for the multi-PUSCHs CG configuration, and the two formulas cannot be mixed; for another example, to control the sending of UTO-UCI (unused transmission occasion-uplink control information).

In an implementation manner, the base station configures at least one set of CG resources for the terminal on a BWP via an RRC signaling, and one set of CG resources may also be called one CG period or one CG configuration. The terminal may perform uplink transmission by itself at a TO in any of all the CG configurations within the CG period configured by the base station. In another implementation manner, the base station configures partial information of at least one CG configuration for the terminal on a BWP via an RRC signaling, and the base station notifies the terminal of the remaining information of the CG configuration via dynamic signaling DCI. After the base station activates the CG configuration via the dynamic signaling DCI, the terminal may perform uplink transmission by itself at a TO in the CG configuration within the CG period configured by the base station.

Based on the above, in some embodiments, the method for distinguishing the normal CG configuration from the multi-PUSCHs CG configuration includes at least one of the following.

Method 1: determine whether a first configuration parameter is configured by RRC.

The first configuration parameter is predefined by a protocol. If the first configuration parameter is configured, the CG configuration corresponding to the first configuration parameter is the multi-PUSCHs CG configuration. Otherwise, the CG configuration is a non-multi-PUSCHs CG configuration. The multi-PUSCHs CG configuration indicates that the number of TOs/PUSCHs included in the CG period is greater than 1, or not less than 2. The non-multi-PUSCHs CG configuration indicates that the number of TOs/PUSCHs included in the CG period is equal to 1.

The first configuration parameter is predefined by a protocol. If the first configuration parameter is not configured, the CG configuration corresponding to the first configuration parameter is the multi-PUSCHs CG configuration. Otherwise, the CG configuration is a non-multi-PUSCHs CG configuration. The multi-PUSCHs CG configuration indicates that the number of TOs/PUSCHs included in the CG period is greater than 1, or not less than 2. The non-multi-PUSCHs CG configuration indicates that the number of TOs/PUSCHs included in the CG period is equal to 1.

Method 2: determine an indication value of a second configuration parameter, and the second configuration parameter is configured by RRC.

The second configuration parameter is predefined by a protocol. If the second configuration parameter is configured as a first identifier or a first value, the CG configuration corresponding to the first configuration parameter is the multi-PUSCHs CG configuration. Otherwise, the CG configuration is a non-multi-PUSCHs CG configuration. The multi-PUSCHs CG configuration indicates that the number of TOs/PUSCHs included in the CG period is greater than 1, or not less than 2. The non-multi-PUSCHs CG configuration indicates that the number of TOs/PUSCHs included in the CG period is equal to 1.

The second configuration parameter is predefined by a protocol. If the second configuration parameter is not configured as a first identifier or a first value, the CG configuration corresponding to the first configuration parameter is the multi-PUSCHs CG configuration. Otherwise, the CG configuration is a non-multi-PUSCHs CG configuration. The multi-PUSCHs CG configuration indicates that the number of TOs/PUSCHs included in the CG period is greater than 1, or not less than 2. The non-multi-PUSCHs CG configuration indicates that the number of TOs/PUSCHs included in the CG period is equal to 1.

The second configuration parameter is predefined by a protocol. If the second configuration parameter is configured as an invalid value or an invalid identifier, the CG configuration corresponding to the first configuration parameter is the multi-PUSCHs CG configuration. Otherwise, the CG configuration is a non-multi-PUSCHs CG configuration. The multi-PUSCHs CG configuration indicates that the number of TOs/PUSCHs included in the CG period is greater than 1, or not less than 2. The non-multi-PUSCHs CG configuration indicates that the number of TOs/PUSCHs included in the CG period is equal to 1.

The second configuration parameter is predefined by a protocol. If the second configuration parameter is not configured as an invalid value or an invalid identifier, the CG configuration corresponding to the first configuration parameter is the multi-PUSCHs CG configuration. Otherwise, the CG configuration is a non-multi-PUSCHs CG configuration. The multi-PUSCHs CG configuration indicates that the number of TOs/PUSCHs included in the CG period is greater than 1, or not less than 2. The non-multi-PUSCHs CG configuration indicates that the number of TOs/PUSCHs included in the CG period is equal to 1.

Method 3: determine a size of a first indication parameter, indicating the number of TOs configured by the CG configuration.

The first indication parameter is predefined by a protocol, and the first indication parameter is configured by an RRC signaling. If the first indication parameter is greater than 1, the corresponding CG configuration is the multi-PUSCHs CG configuration. Otherwise, the CG configuration is a non-multi-PUSCHs CG configuration. The multi-PUSCHs CG configuration indicates that the number of TOs/PUSCHs included in the CG period is greater than 1, or not less than 2. The non-multi-PUSCHs CG configuration indicates that the number of TOs/PUSCHs included in the CG period is equal to 1.

The first indication parameter is predefined by a protocol, and the first indication parameter is configured by an RRC signaling. If the first indication parameter is equal to 1, the corresponding CG configuration is a non-multi-PUSCHs CG configuration. Otherwise, the CG configuration is the multi-PUSCHs CG configuration. The multi-PUSCHs CG configuration indicates that the number of TOs/PUSCHs included in the CG period is greater than 1, or not less than 2. The non-multi-PUSCHs CG configuration indicates that the number of TOs/PUSCHs included in the CG period is equal to 1.

Further, the configuration manners of the configuration parameters or indication parameter as described above are configured by the base station to the terminal via an RRC signaling.

In some embodiments, the method for transmission enablement of the UTO-UCI includes at least one of the following:

A third configuration parameter is predefined by a protocol. If the third configuration parameter is configured by the base station via an RRC signaling, the UTO-UCI corresponding to the multi-PUSCHs CG configuration corresponding to the third configuration parameter does not need to be sent by the UE. Otherwise, the UTO-UCI corresponding to the multi-PUSCHs CG configuration needs to be sent.

A third configuration parameter is predefined by a protocol. If the third configuration parameter is not configured by the base station via an RRC signaling, the UTO-UCI corresponding to the multi-PUSCHs CG configuration corresponding to the third configuration parameter does not need to be sent by the UE. Otherwise, the UTO-UCI corresponding to the multi-PUSCHs CG configuration needs to be sent.

In some embodiments, the multi-PUSCHs CG configuration needs to comply with at least one of the following principles.

In a case where N is not configured to the terminal, it is determined by default that the value of N is n, where n is predefined by a protocol and is an integer not less than 0. Preferably, N is 1 or 2.

In a case where N is not configured to the terminal, it is determined that the multi-PUSCHs CG configuration corresponding to N is not activated.

In a case where N is not configured to the terminal, it is determined that the multi-PUSCHs CG configuration corresponding to N is activated as the normal CG configuration.

N is the number of slots for configuring PUSCH in a CG period or the number of TOs configured in a CG period.

In some embodiments, the application of the UTO-UCI needs to comply with at least one of the following principles:
the terminal is not allowed to indicate a TO that is indicated as "unused" in the previous UTO-UCI as non-"unused" in the subsequent UTO-UCI.
the terminal is not allowed to indicate a TO that is indicated as non-"unused" in the previous UTO-UCI as "unused" in the subsequent UTO-UCI.

Embodiments of the present invention further provide an apparatus for implementing any of the above methods. For example, an apparatus is provided, and the apparatus includes one or more units or modules for implementing various steps performed by the terminal as described in any of the above methods. For another example, another apparatus is provided, which includes one or more units or modules for implementing various steps performed by the network device (such as an access network device, a core network functional node, a core network device, etc.) as described in any of the above methods.

It should be understood that the division of the units or modules in the above apparatuses is only a division of logical functions, and all or part of these units or modules may be integrated into one physical entity or may be physically separated as required in implementation. In addition, the units or modules in the apparatus may be implemented in the form of processor calling software: for example, the apparatus includes a processor, the processor is connected to a memory, instructions are stored in the memory, and the processor calls the instructions stored in the memory to implement any of the above methods or implement the functions of various units or modules of the above apparatus. The processor is, for example, a general-purpose processor, such as a central processing unit (CPU) or a microprocessor, and the memory is a memory inside or outside the apparatus. Alternatively, the units or modules in the apparatus may be implemented in the form of hardware circuit, and the hardware circuit may be designed to implement the functions of some or all of the units or modules. The above hardware circuit may be understood as one or more processors. For example, in an implementation, the above hardware circuit is an application-specific integrated circuit (ASIC), and the functions of some or all of the above units or modules are realized by designing the logical relationship of components in the circuit. For example, in another implementation, the above hardware circuit may be realized by a programmable logic device (PLD). Taking a field programmable gate array (FPGA) as an example, it may include a large number of logic gate circuits, and the connection relationship between the logic gate circuits is configured by a configuration file, so as to realize the functions of some or all of the above units or modules. All units or modules of the above apparatus may be realized in the form of processor calling software or in the form of hardware circuit, or a part of them may be realized in the form of processor calling software, and the rest may be realized in the form of hardware circuit.

In embodiments of the present invention, the processor is a circuit with signal processing capability. In an implementation, the processor may be a circuit with instruction reading and running capability, such as a central processing unit (CPU), a microprocessor, a graphics processing unit (GPU) (which may be understood as a microprocessor), or a digital signal processor (DSP), etc. In another implementation, the processor may realize certain functions through the logical relationship of the hardware circuit, and the logical relationship of the hardware circuit is fixed or reconfigurable. For example, the processor is a hardware circuit implemented by an application-specific integrated circuit (ASIC) or a programmable logic device (PLD), such as FPGA. In a reconfigurable hardware circuit, the processor loads a configuration file to implement the process of hardware circuit configuration, which may be understood as a process where the processor loads instructions to implement the functions of some or all of the above units or modules. In addition, it may also be a hardware circuit designed for artificial intelligence, which may be understood as an ASIC, such as a neural network processing unit (NPU), a tensor processing unit (TPU), a deep learning processing unit (DPU), etc.

FIG. 5 is a block diagram of a terminal according to embodiments of the present invention. As shown in FIG. 5, the terminal 10 may include at least one of: a transceiver module 11, a processing module, etc.

In some embodiments, the transceiver module 11 is configured to receive first indication information sent by a network device, the first indication information indicates that a configured grant (CG) configuration is a first type of CG configuration or a second type of CG configuration, and a CG period indicated by the second type of CG configuration includes multiple TOs. Optionally, the transceiver module is configured to perform at least one of the communication steps such as sending and/or receiving steps (for example, S21, S22, S23, S24, but not limited thereto) performed by the terminal 10 as described in any of the above methods, which will not be repeated here.

In some embodiments, the transceiver module may include a sending module and/or a receiving module, and the sending module and the receiving module may be separated or integrated. Optionally, the transceiver module may be interchangeable with a transceiver.

FIG. 6 is a block diagram of a network device according to embodiments of the present invention. As shown in FIG. 6, the network device 20 may include at least one of: a transceiver module 21, a processing module, etc.

In some embodiments, the transceiver module 11 is configured to send a first indication message to a terminal, the first indication information indicates that a configured grant (CG) configuration is a first type of CG configuration or a second type of CG configuration, and a CG period indicated by the second type of CG configuration includes multiple TOs. Optionally, the transceiver module is configured to perform at least one of the communication steps such as sending and/or receiving steps (for example, S21, S22, S23, S24, but not limited thereto) performed by the network device 20 as described in any of the above methods, which will not be repeated here.

In some embodiments, the transceiver module may include a sending module and/or a receiving module, and the sending module and the receiving module may be separated or integrated. Optionally, the transceiver module may be interchangeable with a transceiver.

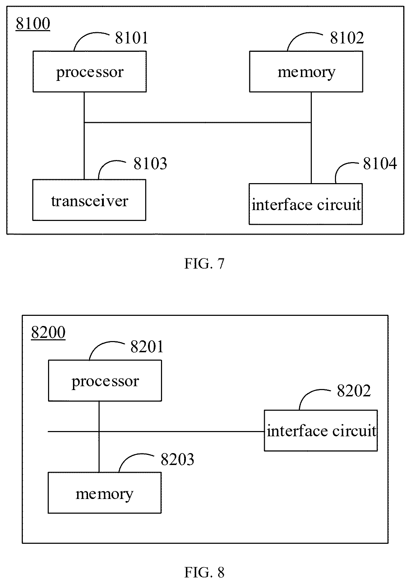

FIG. 7 is a block diagram of a communication device 8100 according to embodiments of the present invention. The communication device 8100 may be a network device (e.g., an access network device, a core network device, etc.), or a terminal (e.g., a user equipment, etc.), or a chip, chip system or processor that supports the network device to implement any of the above methods, or a chip, chip system or processor that supports the terminal to implement any of the above methods. The communication device 8100 may be configured to implement the method as described in the above method embodiments, and for details, reference may be made to the description for the above method embodiments.

As shown in FIG. 7, the communication device 8100 includes one or more processors 8101. The processor 8101 may be a general-purpose processor or a dedicated processor, for example, a baseband processor or a central processing unit. The baseband processor may be configured to process the communication protocol and the communication data, and the central processing unit may be configured to control the communication device (such as a base station, a baseband chip, a terminal, a terminal chip, a DU or a CU, etc.), execute a program, and process the data of the program. The communication device 8100 is configured to perform any of the above methods.

In some embodiments, the communication device 8100 further includes one or more memories 8102 for storing instructions. Optionally, all or part of the memories 8102 may also be set outside the communication device 8100.

In some embodiments, the communication device 8100 further includes one or more transceivers 8103. In a case where the communication device 8100 includes one or more transceivers 8103, the transceiver is configured to perform at least one of the communication steps such as sending and/or receiving steps (for example, S21, S22, S23, S24, but not limited thereto) as described in any of the above methods, and the processor 8101 is configured to perform at least one of other steps (for example, S21, S22, S23, S24, but not limited thereto)

In some embodiments, the transceiver may include a receiver and/or a transmitter, and the receiver and the transmitter may be separated or integrated together. Optionally, the terms such as transceiver, transceiver unit, transceiver machine, transceiver circuit, etc. are interchangeable, the terms such as transmitter, transmitting unit, transmitting machine, transmitting circuit, etc. are interchangeable, and the terms such as receiver, receiving unit, receiving machine, receiving circuit, etc. are interchangeable.

In some embodiments, the communication device 8100 may include one or more interface circuits 8104. Optionally, the one or more interface circuits 8104 are connected to the memory 8102, the interface circuit 8104 may be configured to receive signals from the memory 8102 or other devices, and send signals to the memory 8102 or other devices. For example, the interface circuit 8104 may read instructions stored in the memory 8102 and send the instructions to the processor 8101.

The communication device 8100 described in the above embodiments may be a network device or a terminal, but the scope of the communication device 8100 described in the present invention is not limited thereto, and the structure of the communication device 8100 may not be limited by FIG. 7. The communication device may be a stand-alone device or may be part of a larger device. For example, the communication device may be: (1) a stand-alone integrated circuit (IC), a chip, or a chip system or subsystem; (2) a set of one or more ICs, optionally, the set of ICs may also include a storage component for storing data and programs; (3) an ASIC, such as a Modem; (4) a module that may be embedded in other devices; (5) a receiver, a terminal, an intelligent terminal, a cellular phone, a wireless device, a handheld machine, a mobile unit, a vehicle-mounted device, a network device, a cloud device, an artificial intelligence device, etc.; (6) others.

FIG. 8 is a block diagram of a chip 8200 according to embodiments of the present invention. For the case where the communication device 8100 may be a chip or a chip system, reference may be made to the block diagram of the chip 8200 shown in FIG. 8, but the present invention is not limited thereto.

The chip 8200 includes one or more processors 8201, and the chip 8200 is used to execute any of the above methods.

In some embodiments, the chip 8200 further includes one or more interface circuits 8202. Optionally, the interface circuit 8202 is connected to the memory 8203. The interface circuit 8202 may be used to receive signals from the memory 8203 or other devices, and the interface circuit 8202 may be used to send signals to the memory 8203 or other devices. For example, the interface circuit 8202 may read instructions stored in the memory 8203 and send the instructions to the processor 8201.

In some embodiments, the interface circuit 8202 performs at least one of the communication steps such as sending and/or receiving steps (for example, S21, S22, S23, S24, but not limited thereto) as described in any of the above methods, and the processor 8201 performs at least one of the other steps (for example, S21, S22, S23, S24, but not limited to thereto).

In some embodiments, terms such as interface circuit, interface, transceiver pin, and transceiver may be used interchangeably.

In some embodiments, the chip 8200 further includes one or more memories 8203 for storing instructions. Optionally, all or part of the one or more memories 8203 may be arranged outside the chip 8200.

The present invention also provides a storage medium having stored therein instructions that, when run on the communication device 8100, cause the communication device 8100 to perform any of the above methods. Optionally, the storage medium is an electronic storage medium. Optionally, the storage medium is a computer-readable storage medium, but is not limited thereto, and it may also be a storage medium readable by other devices. Optionally, the storage medium may be a non-transitory storage medium, but is not limited thereto, and it may also be a transitory storage medium.

The present invention also provides a program product that, when executed by the communication device 8100, enables the communication device 8100 to perform any of the above methods. Optionally, the program product is a computer program product.

The present invention also provides a computer program that, when run on a computer, causes the computer to perform any of the above methods.

Those of ordinary skill in the art will appreciate that units and algorithm steps of each example described in conjunction with embodiments disclosed herein may be implemented in electronic hardware, or a combination of computer software and electronic hardware. Whether these functions are implemented in hardware or software depends on the specific application and design constraints of the technical solution. Professional and technical personnel may use different methods to implement the described functions for each specific application, but such implementation should not be considered as beyond the scope of the present invention.

Those skilled in the art can clearly understand that, for the convenience and brevity of description, for the specific working processes of the systems, devices and units described above reference may be made to the corresponding processes in the aforementioned method embodiments and details will not be repeated here.

The above only describes some specific embodiments of the present invention, but the protection scope of the present invention is not limited thereto. Any person skilled in the art who is familiar with the technical field can easily think of changes or substitutions within the technical scope disclosed in the present invention, which should be included in the protection scope of the present invention. Therefore, the protection scope of the present invention should be based on the protection scope of the claims.

## Claims

1. An information determination method, comprising:
receiving first indication information sent by a network device, wherein the first indication information indicates that a configured grant (CG) configuration is a first type of CG configuration or a second type of CG configuration, and a CG period indicated by the second type of CG configuration comprises multiple CG transmission occasions (TOs).

2. The method according to claim 1, wherein
the first indication information comprises a first parameter, and the first indication information indicates that the CG configuration is the second type of CG configuration; or
the first indication information does not comprise a first parameter, and the first indication information indicates that the CG configuration is the first type of CG configuration; or
the first indication information comprises a first parameter, and the first indication information indicates that the CG configuration is the first type of CG configuration; or
the first indication information does not comprise a first parameter, and the first indication information indicates that the CG configuration is the second type of CG configuration; or
the first indication information comprises a second parameter, the second parameter is a specific value, and the first indication information indicates that the CG configuration is the second type of CG configuration; or
the first indication information comprises a second parameter, the second parameter is not a specific value, and the first indication information indicates that the CG configuration is the first type of CG configuration; or
the first indication information comprises a second parameter, the second parameter is a specific value, and the first indication information indicates that the CG configuration is the first type of CG configuration; or
the first indication information comprises a second parameter, the second parameter is not a specific value, and the first indication information indicates that the CG configuration is the second type of CG configuration; or
the first indication information comprises a second parameter, the second parameter is a specific identifier, and the first indication information indicates that the CG configuration is the second type of CG configuration; or
the first indication information comprises a second parameter, the second parameter is not a specific identifier, and the first indication information indicates that the CG configuration is the first type of CG configuration; or
the first indication information comprises a second parameter, the second parameter is a specific identifier, and the first indication information indicates that the CG configuration is the first type of CG configuration; or
the first indication information comprises a second parameter, the second parameter is not a specific identifier, and the first indication information indicates that the CG configuration is the second type of CG configuration; or
the first indication information comprises a third parameter, the third parameter is an integer greater than 1, and the first indication information indicates that the CG configuration is the second type of CG configuration; or
the first indication information comprises a third parameter, the third parameter is 1, and the first indication information indicates that the CG configuration is the first type of CG configuration.

3. The method according to claim 1 or 2, wherein receiving the first indication information sent by the network device comprises:
receiving a radio resource control (RRC) signaling sent by the network device, wherein the RRC signaling comprises the first indication information.

4. The method according to any one of claims 1 to 3, wherein the multiple TOs in the CG period are configured by the network device, or
the multiple TOs in the CG period are valid TOs, and time-frequency resources corresponding to the valid TOs do not conflict with a downlink resource.

5. The method according to any one of claims 1 to 4, further comprising:
receiving second indication information sent by the network device, wherein the second indication information indicates whether the terminal needs to send specific uplink control information for indicating whether a TO is used.

6. The method according to claim 5, wherein
the second indication information comprises a fourth parameter, and the second indication information indicates that the terminal needs to send the specific uplink control information; or
the second indication information comprises a fourth parameter, and the second indication information indicates that the terminal does not need to send the specific uplink control information; or
the second indication information does not comprise a fourth parameter, and the second indication information indicates that the terminal needs to send the specific uplink control information; or
the second indication information does not comprise a fourth parameter, and the second indication information indicates that the terminal does not need to send the specific uplink control information.

7. The method according to claim 5 or 6, further comprising:
sending the specific uplink control information to the network device.

8. The method according to claim 7, wherein
in a case where the specific uplink control information indicates a state of a first TO is used, next specific uplink control information sent next time also indicates the state of the first TO is used; or
in a case where the specific uplink control information indicates a state of a first TO is unused, next specific uplink control information sent next time also indicates the state of the first TO is unused; or
in a case where the specific uplink control information indicates a state of a first TO is used, subsequent specific uplink control information sent thereafter also indicates the state of the first TO is used; or
in a case where the specific uplink control information indicates a state of a first TO is unused, subsequent specific uplink control information sent thereafter also indicates the state of the first TO is unused; or
in a case where the specific uplink control information indicates a state of a first TO is unused, the terminal is not allowed to modify the state of the first TO; or
in a case where the specific uplink control information indicates a state of a first TO is used, the terminal is not allowed to modify the state of the first TO.

9. The method according to any one of claims 5 to 8, wherein receiving the second indication information sent by the network device comprises:
receiving a radio resource control (RRC) signaling sent by the network device, wherein the RRC signaling comprises the second indication information; or
receiving a dynamic signaling sent by the network device, wherein the dynamic signaling comprises the second indication information; or
receiving a media access control control element (MAC CE) sent by the network device, wherein the MAC CE comprises the second indication information.

10. The method according to any one of claims 1 to 9, further comprising:
receiving configuration information sent by the network device, wherein the configuration information comprises a specific CG configuration for the second type of CG configuration.

11. The method according to claim 10, further comprising:
determining that the specific CG configuration does not comprise a specific parameter, and determining by default that the specific parameter is n, where n is predefined by a protocol; or
determining that the specific CG configuration does not comprise a specific parameter, and determining that the specific CG configuration is not activated; or
determining that the specific CG configuration does not comprise a specific parameter, determining that the specific CG configuration is activated as the first type of CG configuration, and only a first TO among multiple TOs indicated by the specific CG configuration is available;
wherein the specific parameter is a number of slots for configuring PUSCH in the CG period or a number of TOs configured in the CG period.

12. An information determination method, comprising:
sending first indication information to a terminal, wherein the first indication information indicates that a configured grant (CG) configuration is a first type of CG configuration or a second type of CG configuration, and a CG period indicated by the second type of CG configuration comprises multiple transmission occasions (TOs).

13. The method according to claim 12, wherein
the first indication information comprises a first parameter, and the first indication information indicates that the CG configuration is the second type of CG configuration; or
the first indication information does not comprise a first parameter, and the first indication information indicates that the CG configuration is the first type of CG configuration; or
the first indication information comprises a first parameter, and the first indication information indicates that the CG configuration is the first type of CG configuration; or
the first indication information does not comprise a first parameter, and the first indication information indicates that the CG configuration is the second type of CG configuration; or
the first indication information comprises a second parameter, the second parameter is a specific value, and the first indication information indicates that the CG configuration is the second type of CG configuration; or
the first indication information comprises a second parameter, the second parameter is not a specific value, and the first indication information indicates that the CG configuration is the first type of CG configuration; or
the first indication information comprises a second parameter, the second parameter is a specific value, and the first indication information indicates that the CG configuration is the first type of CG configuration; or
the first indication information comprises a second parameter, the second parameter is not a specific value, and the first indication information indicates that the CG configuration is the second type of CG configuration; or
the first indication information comprises a second parameter, the second parameter is a specific identifier, and the first indication information indicates that the CG configuration is the second type of CG configuration; or
the first indication information comprises a second parameter, the second parameter is not a specific identifier, and the first indication information indicates that the CG configuration is the first type of CG configuration; or
the first indication information comprises a second parameter, the second parameter is a specific identifier, and the first indication information indicates that the CG configuration is the first type of CG configuration; or
the first indication information comprises a second parameter, the second parameter is not a specific identifier, and the first indication information indicates that the CG configuration is the second type of CG configuration; or
the first indication information comprises a third parameter, the third parameter is an integer greater than 1, and the first indication information indicates that the CG configuration is the second type of CG configuration; or
the first indication information comprises a third parameter, the third parameter is 1, and the first indication information indicates that the CG configuration is the first type of CG configuration.

14. The method according to claim 12 or 13, wherein sending the first indication information to the terminal comprises:
sending a radio resource control (RRC) signaling to the terminal, wherein the RRC signaling comprises the first indication information.

15. The method according to any one of claims 12 to 14, wherein the multiple TOs in the CG period are configured by the network device, or
the multiple TOs in the CG period are valid TOs, and time-frequency resources corresponding to the valid TOs do not conflict with a downlink resource.

16. The method according to any one of claims 12 to 15, further comprising:
sending second indication information to the terminal, wherein the second indication information indicates whether the terminal needs to send specific uplink control information for indicating whether a TO is used subsequently.

17. The method according to claim 16, wherein
the second indication information comprises a fourth parameter, and the second indication information indicates that the terminal needs to send the specific uplink control information; or
the second indication information comprises a fourth parameter, and the second indication information indicates that the terminal does not need to send the specific uplink control information; or
the second indication information does not comprise a fourth parameter, and the second indication information indicates that the terminal needs to send the specific uplink control information; or
the second indication information does not comprise a fourth parameter, and the second indication information indicates that the terminal does not need to send the specific uplink control information.

18. The method according to claim 16 or 17, further comprising:
receiving the specific uplink control information sent by the terminal.

19. The method according to claim 18, further comprising:
in a case where the specific uplink control information indicates a state of a first TO is used, ignoring, by the network device, an indication for the first TO from subsequent specific uplink control information; or
in a case where the specific uplink control information indicates a state of a first TO is unused, ignoring, by the network device, an indication for the first TO from subsequent specific uplink control information.

20. The method according to any one of claims 16 to 19, wherein sending the second indication information to the terminal comprises:
sending a radio resource control (RRC) signaling to the terminal, wherein the RRC signaling comprises the second indication information; or
sending a dynamic signaling to the terminal, wherein the dynamic signaling comprises the second indication information; or
sending a media access control control element (MAC CE) to the terminal, wherein the MAC CE comprises the second indication information.

21. The method according to any one of claims 12 to 20, further comprising:
sending configuration information to the terminal, wherein the configuration information comprises a specific CG configuration for the second type of CG configuration.

22. The method according to claim 21, wherein the specific CG configuration does not comprise a specific parameter, the specific parameter is a number of slots for configuring PUSCH in the CG period or a number of TOs configured in the CG period.

23. An information determination method, comprising:
sending, by a network device, first indication information to a terminal, wherein the first indication information indicates that a configured grant (CG) configuration is a first type of CG configuration or a second type of CG configuration, and a CG period indicated by the second type of CG configuration comprises multiple transmission occasions (TOs); and
receiving, by the terminal, first indication information sent by the network device.

24. A terminal, comprising:
a transceiver module, configured to receive first indication information sent by a network device, wherein the first indication information indicates that a configured grant (CG) configuration is a first type of CG configuration or a second type of CG configuration, and a CG period indicated by the second type of CG configuration comprises multiple transmission occasions (TOs).

25. A network device, comprising:
a transceiver module, configured to send first indication information to a terminal, wherein the first indication information indicates that a configured grant (CG) configuration is a first type of CG configuration or a second type of CG configuration, and a CG period indicated by the second type of CG configuration comprises multiple transmission occasions (TOs).

26. A terminal, comprising: one or more processors, wherein the terminal is configured to perform the information determination method according to any one of claims 1 to 11.

27. A network device, comprising: one or more processors, wherein the network device is configured to perform the information determination method according to any one of claims 12 to 22.

28. A storage medium having stored therein instructions that, when run by a communication device, cause the communication device to perform the information determination method according to any one of claims 1 to 11 or claims 12 to 22.
